# EUROPEAN PATENT SPECIFICATION

(11) **EP 1 033 056 B1**
(45) Date of publication and mention of the grant of the patent: **11.02.2009**
(21) Application number: 98953129.8
(22) Date of filing: 30.10.1998
(51) Int. Cl.: H04Q 11/04

(54) **IMPROVEMENTS IN, OR RELATING TO, ATM TELECOMMUNICATION SYSTEMS**
VERBESSERUNGEN AN ATM-TELEKOMMUNIKATIONSSSYSTEMEN
AMELIORATIONS APPORTEES A DES SYSTEMES DE TELECOMMUNICATION ATM

(30) Priority: 04.11.1997 SE 9704019
(43) Date of publication of application: 06.09.2000
(73) Proprietor: TELIASONERA AB, 106 63 Stockholm (SE)
(72) Inventor: NAZARI, Ala, S-136 45 Haninge (SE)
(74) Representative: Hopfgarten, Nils
(86) International application number: PCT/SE1998/001974
(87) International publication number: WO 1999/022574

(56) References cited:
- EP-A2- 0 781 010
- IEICE TRANSACTIONS COMMUNICATIONS, Volume E80-B, No. 3, August 1997, SHIGEO MATSUZAWA et al., "Architecture of Cell Switch Router and Prototype System Implementation", pages 1227-1238.
- IEICE TRANSACTIONS ON COMMUNICATIONS, Volume E78-B, No. 8, August 1995, HIROSHI ESAKI et al., "High Speed Datagram Delivery over Internet Using ATM Technology", pages 1208-1218.
- IEEE COMMUNICATIONS MAGAZINE, Volume 35, No. 1, January 1997, PETER NEWMANET et al., "IP Switching and Gigabite Routers", pages 64-69.

## Description

The present invention relates to an ATM telecommunication system adapted for the transmission of IP data over ATM, and to a simple IP/ATM method (SIAM) for the transportation of IP data over an ATM transmission system.

The Internet Engineering Task Force (IETF) has proposed different methods for the transportation of IP (Internet Protocol) over ATM (Asynchronous Transfer Mode). For example, Classical IP over ATM is the name of a protocol supporting automatic address resolution of IP addresses (see M. Laubach, Classical IP and ARP over ATM, RFC 1577, January 1994). This protocol introduces the notion of LIS (Logical IP Subnet) consisting of a group of IP nodes (IP hosts, or routers), members of the same IP subnet and connected to a single ATM network. Each LIS supports a single ATM ARP server (Address Resolution Server) that resolves the IP addresses of the LIS. Any packet for a destination outside the LIS is sent to a default router. This approach is very simple but has a significant drawback because it needs a conventional router to interconnect different LISs although the source and destination attach to the same ATM network. This hop-by-hop routing approach implies throughput and latency problems.

At the present time, IETF is working on a new protocol called NHRP (Next Hop Resolution Protocol) that solves the hop-by-hop problem by allowing short-cut routing. In place of ARP servers, NHRP servers (NHSs) are used where each maintains the IP to ATM address mappings of all nodes associated with that NHS as well as the learned mappings. When a host needs to transmit a packet across the ATM network, it resolves the IP destination address by asking its NHS which resolves the address, or forwards the resolution request to the next NHS on the path to the destination. When the destination address is resolved, the sender sets up a direct SVC (Switched Virtual Connection) to that destination so that short-cut routing is achieved. One significant drawback of the NHRP approach is that looping may occur in some cases. Furthermore, it scales badly because no aggregation of user data flows is supported, leading to the consumption of a large number of SVCs.

At the present time, the ATM Forum is working on MPOA (Multi-Protocol Over ATM) for the transport of IP and other Internet-working protocols over ATM (see ATM Forum, Multi-Protocol over ATM, straw ballot, str-mpoa-mpoa-01.00, February 1997). MPOA supports virtual private networking regardless of physical location. In addition, MPOA:
- defines a high performance and low-latency method to support IP across an ATM network based on short-cut routing; and
- makes use of LAN emulation for intra-subnet communication and NHRP for intersubnet communication; but
- suffers from the same drawbacks as NHRP.

MPOA is also very complex and requires the use of ATM Forum's LAN emulation at the MPOA clients.

A number of industrial IP/ATM approaches have recently been defined. Some examples of these approaches are:
- IP switching from Ipsilon (see P Newman et al, Transmission of Flow Labelled Ipv4 on ATM Data Links, IETF RFC 1954, May 1996);
- Tag Switching from Cisco (see Y Rekhter et al, tag Switching Architecture Extensions for ATM: Overview, <draft-rekhter-tagswitch-arch-00.txt>. January 1997); and
- Cell Switch Router from Toshiba (see Y Katsube et al, Toshiba's Router Architecture Extensions for ATM: Overview, IETF RFC 2098, February 1997).

These approaches combine the speed and simplicity of ATM with the scalability and control of the IP layer. The major difference between these approaches, compared to existing ones, lies in the degree to which IP is integrated with ATM.

Two major changes in the internet have also contributed to the birth of new paradigms. The first one is the knowledge of the nature of the applications at the IP level, and the second one is the relaxation of the connectionless nature of IP.

A common feature of all the aforementioned approaches is the use of IP flows which are classified and mapped into ATM virtual channels (labelling) achieving high performance and low latency through bypassing the hop-by-hop IP processing. Also, each of the aforementioned approaches makes use of a control protocol that performs labelling and announces the result of that to its neighbouring nodes (label distribution). However, SIAM has a simpler architecture because it does not require the use of the label distribution protocols which characterise the existing methods, for example, IP Switching (Ipsilon Flow Management Protocol). Cell Switch Router (Flow Attribute Notification Protocol) and Tag Switching (Tag Distribution Protocol (Cisco)).

In the article by Shigeo Matsuzawa et. al., "Arhcitecture of Cell Switch Router and Prototype System Implementation", IEICE Transactions Communications, Volume E80-B, No. 3, August 1997, pages 1227-1238, an overview of Cell Switch Router (CSR) and a CSR prototype system are described. The article describes and proposes the mechanism to forward the connectionless IP packet flows at the CSR.

In the article by Peter Newman et. al., "IP Switching and Gigabit Routers", IEEE Communications Magazine, Volume 35, No. 1, January 1997, pages 64-69, the issue of the rapidly growing Internet and the great increase of the number of hosts on the Internet is discussed. This requires Internet Protocol (IP) routing capacity of many gigabits per second of aggregate traffic. The article examines two approaches, the gigabit router and the IP switch.

In the article by Hiroshi Esaki et. al., "High Speed Datagram Delivery over Internet Using ATM Technology", IEICE Transactions Communications, Volume E78-B, No. 8, August 1995, pages 1208-1218, a high throughout small latent IP packet delivery architecture is proposed, which uses ATM technology in a large scaled Internet.

It is an object of the present invention to provide a simple IP/ATM method (SIAM) that bypasses hop-by-hop IP processing by mapping IP flows into ATM VCs (Virtual Circuits).

According to one aspect of the present invention, there is provided, an ATM transmission system, for transmitting IP data and including a core network of ATM switches, said ATM transmission system being adapted to handle inter-subnet communications, characterised in that said core network includes access IP/ATM nodes (AINs) and core IP/ATM nodes (CINs) for handling said inter-subnet communications, in that each AIN is attached to an ATM switch of the core network through an ATM User-Network Interface (UNI) and is adapted to perform IP data flow classification and labelling for facilitating mapping of IP data flows to ATM VCs, and to communicate with IP/ATM hosts and routers, in that each CIN is attached to an ATM switch of the core network through an ATM UNI and is adapted to perform routing and labelling, in that said AINs and CINs are interconnected through Virtual Path Connections (VCPs), and in that permanent VCPs are set-up between adjacent CINs. The AINs may be adapted to communicate with non-ATM hosts using, for example, Ethernet. The inter-subnet communications may be effected on a hop-by-hop basis, in which case, the ATM transmission system may be adapted to map each IP data flow into an ATM Virtual Circuit (VC) for each hop, between nodes, on the communication path towards a destination subset. In which case, the ATM VC for each hop between nodes will be a VCI selected from a VPC connecting the two nodes.

Each AIN may be adapted, on receipt of an IP data packet from an IPIATM host for transmission to a destination subnet, to reassemble the IP data packet, decrement a TTL (Time To Live) timer, discarding the IP data packet if the timer reaches zero, compute the IP data packet header checksum, and check whether the destination subnet is supported by the AIN and, if so, send the IP data packet on that subnet. Each AIN may include, and be adapted to maintain, a labelling table and a standard IP forwarding table, the entries of which are completed by an IP routing protocol. With this arrangement, each entry in the labelling table includes a subnet address, the outgoing VC (VPI/VCI) to reach the subnet, and a timer for the VC, and the timer is adapted to be started whenever IP packets are sent on the VC. In the event that the destination subnet is not supported by the AIN, it may be adapted to identify an existing ATM VC towards said destination subset and to send the IP data packet on an identified existing ATM VC. In the event that an existing ATM VC is not identified, the AIN may be adapted to identify the next hop on the path to the destination subnet, by consulting its forwarding table, and to chose, and send the IP packet on, a free VCI from the VPC to the next hop. In which case, the AIN is adapted to update its labelling table by making an entry containing the destination subnet address and the chosen VC, and to restart the entry's timer, said timer having a lifetime value for the VC. The next hop on the path to the destination subnet may be a CIN.

Each AIN may be adapted to listen to the VPCs to which it is set up, to reassemble the cells coming from the core network into IP packets, to perform computations on TTL and header checksum, and to route valid packets towards ATM hosts/routers attached to an access network.

Each CIN may be adapted to listen to the VPCs to which it is set up, retrieve an IP packet from a cell received on a VCI of one of said VPCs, decrement a TTL and compute the IP packet header checksum, consult its labelling table to determine if there is an outgoing VC already in existence to a destination subnet to which the IP packet is to be sent and, if an existing outgoing VC is identified, send the IP packet on that VC and restart the VC's timer. In the event that an existing outgoing VC is not identified, said CIN may be adapted to identify the next hop on the path towards the destination subnet by consulting its IP forwarding table, and to chose a free VCI from the VPC to the next hop. In which case, the CIN is adapted to update its labelling table by making an entry containing the destination subnet address, the incoming VC, the outgoing VC and the free VCI chosen from the VPC to the next hop, and to set the VC timer for the newly created entry in said labelling table, send the IP packet on the outgoing VC and cross-connect the VC incoming to, and the VC outgoing from, its ATM switch. Thereafter, all cells received on said incoming VC are forwarded to the outgoing VC within said ATM switch. The CIN may be adapted to control said cross-connection using Switchlets, an Ariel interface being provided between said ATM switch and said CIN for cross-connecting said incoming and outgoing VCs of said ATM switch. The cross-connected VCs may be the VCIs of the incoming and outgoing Virtual Path (VP) links between said CIN's ATM switch and its two neighbouring ATM switches, one on an input side of, and the other on an output side of, said CIN's ATM switch.

The CIN may be adapted to periodically monitor the cross-connected VCs in order to disconnect any VC found to be idle. An Ariel interface may be provided between said CIN and its ATM switch, in which case, the CIN would be adapted to use the Ariel interface to periodically monitor the cross connected VCs.

In the event that an incoming VC is found to be inactive, said CIN may be adapted to purge the corresponding outgoing VC from its labelling table, the corresponding incoming VC being cross-connected back to the CIN via a VP link on the CIN/ATM switch interface, and to re-enter the purged outgoing VC into its labelling table as a free VC.

Each entry in a CINs labelling table may contains a list of all incoming, merged, Vcs, the outgoing VC towards a destination subnet, said outgoing VC being used by the CIN during the merging of new incoming VCs and is established when a new entry is created in the labelling table, the destination subnet address, and VC timers, one for each incoming VC.

Each CIN may be adapted to merge a new incoming VC with an outgoing VC, in which case, each CIN may be adapted to listen to the VPCs to which it is set up and to retneve an IP packet received on a VCI of one of said VPCs, decrement the TTL and compute the IP packet header checksum, consult its labelling table to determine if there is an outgoing VC already in existence to the destination subnet to which the retrieved IP packet is to be sent, if an existing outgoing VC is identified, send the IP packet on that VC to the destination subnet, the CIN merging the incoming VC to the outgoing VC to the subnet and, in the event that the incoming VC is not included in the list of incoming VCs in its labelling table, add it to said labelling table. In the event that an existing outgoing VC is not identified, each CIN may be adapted to find the next hop on the path towards the destination subnet by consulting its IP forwarding table and to chose a free VCI from the VPC to the next hop. In which case, said CIN may be adapted to update its labelling table by making an entry containing the destination subnet address, the incoming VC (first in the VC list), the outgoing VC and the free VCI chosen from the VPC to the next hop, and to send the IP packet on the outgoing VC, to merge the incoming VC to the outgoing VCs using a CIN/ATM switch interface and to start a timer for the incoming VC. Thereafter, all cells received on said incoming VC are forwarded to the outgoing VC within said ATM switch.

Each CIN may be adapted to periodically monitor the cross-connected/merged VCs in order to disconnect any VC found to be idle. In the event that an incoming VC is found to be inactive, said CIN may be adapted to purge the corresponding outgoing VC from its labelling table, the incoming VC being cross-connected back to the CIN via a VP link on the CIN/ATM switch interface. In the event that the VC list becomes empty, said CIN may be adapted to return the purged outgoing VC to its labelling table, and to delete the entry for the subnet from the labelling table.

In the event of rerouting of an IP packet, the CIN may be adapted to assign new VCs to the affected subnet addresses in its labelling table, based on new routes for the IP packet, the old VCs, after being timed out, being re-entered in the labelling table as free VCs.

The ATM transmission system of the present invention may be adapted to provide Quality of Service (QoS) support by setting up CBR VPCs in parallel to UBR VPCs. With this arrangement, each AIN may be adapted to assign service classes to data flows and give an indication of the data rate assigned to each flow using the type of service field in the IP packet header, and each CIN may be adapted, on receipt of an IP packet on a CBR VC, to first find a free outgoing CBR VC towards the destination subnet, allocate a required data rate based on the type of service value, send the IP packet on the free outgoing CBR VC. and finally, cross-connect the incoming and outgoing VCs at its ATM switch.

According to another aspect of the present invention, there is provided, a method for transmitting IP data over an ATM transmission system having a core network including a number of ATM switches, said method handling inter-subnet communications, on a hop-by-hop basis, which method comprises the steps defined in the enclosed claim 27. The method may be further characterised by said AIN maintaining a labelling table and a standard IP forwarding table filled by an IP routing protocol. The labelling table may include a subnet address, the outgoing VC (VPI/VCI) to reach the subnet, and a timer for the VC, the timer being started whenever IP packets are sent on the VC. The method may be further characterised by the steps of, in the event that the destination subnet is not supported by the AIN, consulting the labelling table of said AIN to determine if there is an ATM VC already in existence towards the destination subset to which the packet is to be sent; and, if an existing ATM VC is identified, said AIN hashes on the subnet address; sends the packet on the identified VC; and restarts the timer. The method may be further characterised by the steps of consulting the forwarding table of said AIN, in the event that an existing ATM VC is not identified, to find the next hop on the path to the destination subnet; finding a free VCI from the VPC to the next hop (may be a CIN); sending the IP packet on a chosen VCI, creating, in the labelling table of said AIN, an entry containing the destination subnet address and the VC; and restarting the entry's timer, said timer having a lifetime value for the VC.

The method may be characterised by the step of using VC multiplexing (null encapsulation) of IETF RFC 1483 to encapsulate IP packets sent on said ATM VCs

The method may be characterised by the steps of purging a VC entry from the labelling table of an AIN, in the event that a corresponding VC timer times out, the purged VC being cached for a period of time before becoming available for use; forcing all downstream VCs, in the path to the destination subnet, to be timed out; and, if rerouting occurs to new routes, the affected subnet addresses found in the labelling table are assigned new VCs, based on the new routes, the old VCs becoming free after being timed out.

The method may be characterised by the steps of listening to the VPCs set up to an AIN; reassembling the cells coming from the core network into IP packets; performing computations on TTL and header checksum; and routing valid packets towards ATM hosts/routers attached to an access network.

The method may be characterised by the steps of listening to the VPCs set up to a CIN; reassembling a cell, received by the CIN on a VCI of one of said VPCs, to retrieve an IP packet; decrementing the TTL and computing the IP packet header _ checksum; consulting a labelling table of the CIN to determine if there is an outgoing VC already in existence to a destination subnet to which the IP packet is to be sent; and, if an existing outgoing VC is identified, the CIN sends the IP packet on that VC and restarts its timer. The method may be further characterised by the steps of consulting an IP forwarding table of the CIN, in the event that an existing outgoing VC is not identified, to find the next hop on the path towards the destination subnet; finding a free VCI from the VPC to the next hop; creating, in the labelling table of said CIN, an entry containing the destination subnet address, the incoming VC, and the outgoing VC, the free VCI chosen from the VPC to the next hop; setting the VC timer for the newly created entry in the CIN's labelling table; sending the IP packet on the outgoing VC; and cross-connecting the incoming and outgoing VCs of the CIN's ATM switch, all cells thereafter received on said incoming VC being forwarded to said outgoing VC within said ATM switch. The method may be further characterised by the step of cross-connecting said incoming and outgoing VCs of said ATM switch using an Ariel interface between said switch and said CIN. The method may be further characterised by said cross-connected VCs being the VCIs of the incoming and outgoing Virtual Path (VP) links between the CIN's ATM switch and its two neighbouring ATM switches, one on an input side of, and the other on an output side of, said CIN's ATM switch.

The method may be characterised by said CIN periodically monitoring the cross connected VCs in order to disconnect any VC found to be idle. The method may be further characterised by using an Ariel interface between said CIN and its ATM switch to periodically monitoring the cross connected VCs. The method may be further characterised by the steps of, in the event that an incoming VC is found to be inactive, the corresponding outgoing VC is purged from the CINs labelling table; the outgoing VC is put back into the labelling table as a free VC; and the incoming VC is cross-connected back to the CIN via a VP link on the CIN/ATM switch interface. Each entry in a CINs labelling table may contain a list of all incoming, merged, VCs, the outgoing VC towards a destination subnet, said outgoing VC being used by the CIN during the merging of new incoming VCs and is established when a new entry is created in the labelling table, the destination subnet address, and VC timers, one for each incoming VC.

The method may be characterised by said merging of a new incoming VC with the outgoing VC including the steps of each CIN listening to the VPCs set up to it, an IP packet received on a VCI of one of the VPCs being retrieved by the CIN; decrementing the TTL and computing the IP packet header checksum; consulting the CIN's labelling table to determine if there is an outgoing VC already in existence to the destination subnet to which the retrieved IP packet is to be sent; if an existing outgoing VC is identified, the CIN sends the IP packet on that VC to the destination subnet, the CIN merging the incoming VC to the outgoing VC to the subnet; and, in the event that the incoming VC is not included in the list of incoming VCs in the CIN's labelling table, it is added to the table by the CIN. The method may be further characterised by the steps of consulting an IP forwarding table of the CIN, in the event that an existing outgoing VC is not identified, to find the next hop on the path towards the destination subnet; finding a free VCI from the VPC to the next hop; creating, in the labelling table of said CIN, an entry containing the destination subnet address, the incoming VC (first in the VC list), the outgoing VC, the free VCI chosen from the VPC to the next hop; sending the IP packet on the outgoing VC; and merging the incoming VC to the outgoing VCs using the CIN/ATM switch interface and starting a timer for the incoming VC, all cells thereafter received on said incoming VC being forwarded to the outgoing VC within said ATM switch.

The method may be characterised by said CIN periodically monitoring the cross connected/merged VCs using the CIN/ATM switch interface in order to disconnect any VC found to be idle.

The method may be characterised by the steps of, in the event that an incoming VC is found to be inactive, the corresponding outgoing VC is purged from the CINs labelling table; the incoming VC is cross-connected back to the CIN via a VP link on the CIN/ATM switch interface; and, if the VC list becomes empty, the outgoing VC is returned as a free VC and the entry for the subnet is deleted from the CIN's labelling table.

The method may be characterised by, in the event of rerouting of an IP packet, the affected subnet addresses in the CIN's labelling table are assigned new VCs based on new routes for the packet, and the old VCs are put back as free VCs, after being _ timed out.

The method may be characterised by providing Quality of Service (QoS) support by setting up CBR VPCs in parallel to UBR VPCs; by each AIN assigning service classes to data flows and giving an indication of the data rate assigned to each flow using the type of service field in the IP packet header; and by a CIN, on receipt of an IP packet on a CBR VC first finding a free outgoing CBR VC towrads the destination subnet; allocating the required data rate based on the type of service value; sending the IP packet on the free outgoing CBR VC; and finally, cross-connecting the incoming and outgoing VCs at the CIN's ATM switch.

According to a further aspect of the present invention, there is provided, an IP/ATM network including an ATM transmission system as outlined in any of the preceding paragraphs, or using a method as outlined in any of the preceding paragraphs.

The foregoing and other features of the present invention will be better understood from the following description with reference to the accompanying drawings, in which:
Figure 1 diagrammatically illustrates, in the form of a block diagram, an example of a network scenario using the method (SIAM) of the present invention for the transportation of IP over ATM;
Figure 2 diagrammatically illustrates, in the form of a block diagram, a CIN connected to an ATM switch;
Figure 3 diagrammatically illustrates, in the form of a block diagram, an IPIATM network in which SIAM is used for inter-subnet communication; Figures 4(A) and (B) diagrammatically illustrate, in block diagram form, an ATM switch before and after cross-connection of the incoming and outgoing VCs, respectively; and
Figure 5 diagrammatically illustrates, in the form of a block diagram, an ATM switch and the merging of an incoming VC with the outgoing VC.

In order to facilitate an understanding of the present invention a glossary of terms used in this patent specification is provided below:
- AIN:: Access IP/ATM Node

- ARP:: Address Resolution Protocol
- ATM:: Asynchronous Transfer Mode
- CIN:: Core IP/ATM Node
- CSR:: Cell Switch Router
- DNS:: Domain Name System
- FTP:: File Transfer Protocol
- IETF:: Internet Engineering Task Force
- IGMP:: Internet Group Management Protocol
- IP:: Internet Protocol
- LAN:: Local Area Network
- LIS:: Logically Subnet
- MARS:: Multicast Address Resolution Service
- MPOA:: Multi-Protocol Over ATM
- NHRP:: Next Hop Resolution Protocol
- NHS:: NHRP server
- OSPF:: Open Shortest Path First Protocol
- PIM:: Protocol Independent Multicast
- P-NNI::
- QoS:: Quality of Service
- RFC:: Request for Comment
- RSVP:: Resource ReServation Protocol
- SDC:: Switch Diver Controller
- SIAM:: Simple IP/ATM Method
- SVC:: Switched Virtual Circuit
- TTL:: Time To Line
- UBR:: Unspecified Bit Rate
- UNI:: User-Network Interface
- VC:: Virtual Circuit
- VCI:: Virtual Channel Identifier
- VPC:: Virtual Path Connection
- VPI:: Virtual Path Identifier

It will be seen from the subsequent description that:
- SIAM supports the aggregation of best effort flows which for the time being constitute the main source of traffic in the Internet:
- the flows are classified, based on destination subnets, which is sufficient for unicast best effort aggregation and which scales well in terms of the number of ATM VCs that are used;
- the flow classification and mapping is done at the edge of the network; and
- core nodes perform flow mapping only.

Unlike other methods, SIAM does not require any protocol for label distribution, hence a simpler architecture is achieved. The inspiration for SIAM came from the Broadband Data Service method specified and implemented, a few years ago, by Telia (see Nail Kavak, Kim Laraqui, Ala Nazari and Patrick Ernberg, The Design and Implementation of a Connectionless Broadband Data Service Protocol Over ATM, INTERNETWORKING '94, May 1994).

SIAM is based on the hop-by-hop subnet model where all communications to destinations outside the subnet go through a router. In other words, SIAM provides for inter-subnet communication within the IP/ATM network. For intra-subnet communication at the access part of the network, other IP/ATM methods are applied, for example, the Classical IP/ATM (RFC 1577), IP/PPP/ATM, etc..

Within the core network, SIAM relies on permanent VCs for best effort and multicast traffic. Whereas SVCs are used for communication at the access. SVCs also support RSVP which is mapped on ATM at the edges.

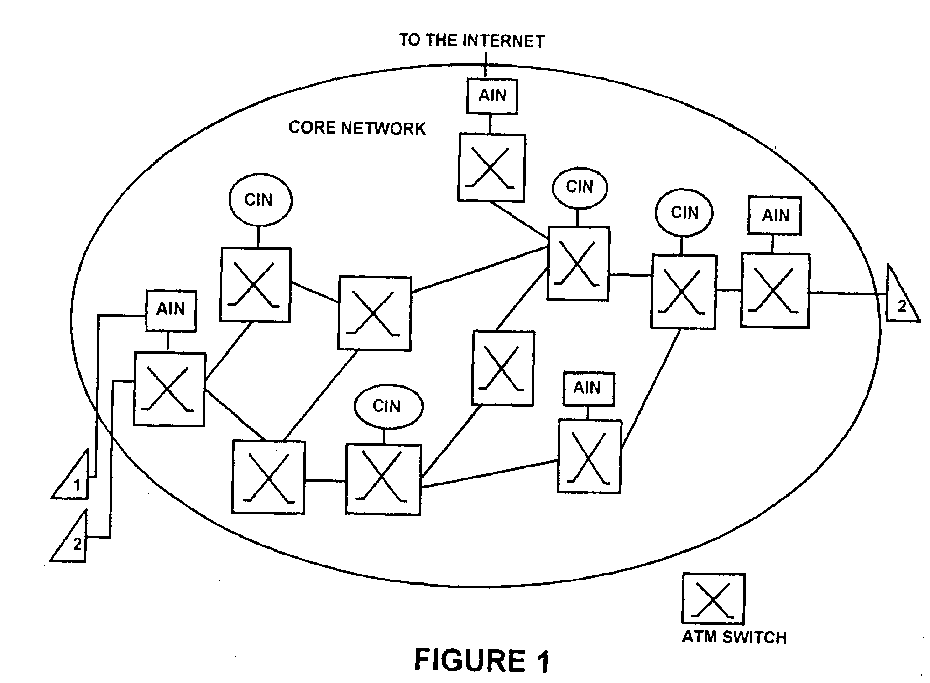

In accordance with the present invention, an ATM network will have two types of node, namely, Access IP/ATM Nodes (AINs) and Core IP/ATM Nodes (CINs), as shown in Figure 1 of the accompanying drawings which diagrammatically illustrates, in the form of a block diagram, an example network scenario using SIAM. These nodes are used for inter-subnet communication and logically segment the ATM network in the same manner as Classical IP/ATM routers. However, AINs and CINs differ from Classical IP/ATM routers in that they provide cut-through of the IP forwarding.

An IP host, or router, is represented in Figure 1 by a triangular block 1 and an IP/ATM host, or router, is represented by a triangular block 2. As is diagrammatically illustrated in Figure 1, the ATM network includes a core network of ATM switches and each AIN and CIN is attached to an ATM switch through an ATM User-Network Interface (ATM UNI).

The Access IP/ATM Nodes (AlNs):
- perform IP flow classification and labelling, i.e. mapping IP flows to ATM VCs;
- communicate with IP/ATM hosts/routers using RFC 1577, or IP/PPP/ATM; and
- attach to the ATM network through the ATM UNI (User-Nehnrork Interface).

Non-ATM hosts can also communicate with AINs using other network technologies, for example, Ethernet.

The Core IP/ATM Nodes (CINs):
- perform routing and labelling;
- attach to the ATM network through the UNI (User-Network Interface); and
- permanent VPCs (Virtual Path Connections) are set-up between adjacent CINs.

CINs and AINs are also interconnected through VPCs. A partial mesh VPC connectivity needs to be defined for the Core.

Each flow is mapped into an ATM VC for each hop on the path towards the destination subnet. The VC for one hop between two SIAM nodes is established by selecting a free VCI from the VPC connecting the two nodes. Cut-through for one flow is achieved at a CIN via cross-connecting the flow's assigned VCs at the ATM switch to which the CIN is connected. The cross-connection is controlled by CIN and is performed by using the Switchlet approach (see J E van der Merwe, IM Leslie, Switchlets and Dynamic Virtual ATM Networks, Integrated Network Management V, Proceedings of the Fifth IFIP/IEEE International Symposium on Integrated Network Management, May 1997).

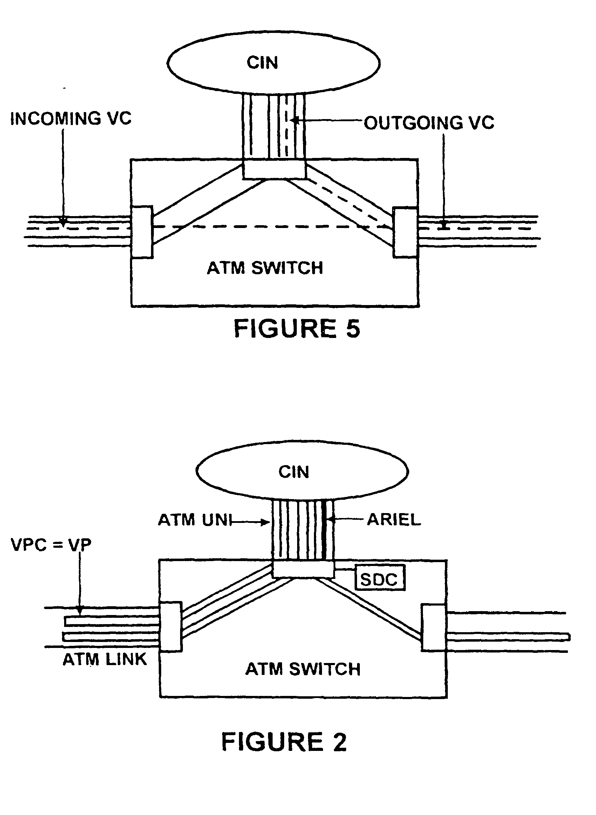

For each CIN, a Switchlet is defined containing all the CIN's VPCs established in its ATM switch. The Switchlets of all CINs form a virtual ATM network. By using the Ariel interface the CIN cross-connects the VCIs of its VPCs. The CIN's ATM interface carries both IP traffic (not yet cross-connected) as well as the Ariel interface that terminates, as shown in Figure 2, at a SDC (Switch Divider Controller). The SDC creates the Switchlet for the CIN. It can be implemented inside, or outside, the ATM switch. The same is valid for the CIN.

A CIN connected to the ATM switch and having three VPCs, set-up to three neighbours, is diagrammatically illustrated, in the form of a block diagram, in Figure 2 of the accompanying drawings.

The AINs, as described herein, do not need Switchlets because they do not perform any cross-connection at their ATM switches. However, if the host is attached via ATM and it classifies and labels flows in the same manner as the AIN, then the AIN will function as a CIN, i.e. it will perform labelling and cross-connection through an Ariel interface (see Figure 2). This is a further development of SIAM which is not addressed by this patent specification.

The Switchlet approach has been chosen because of its ability to allow each ATM switch to be shared among different control protocols such as the P-NNI and IP protocols. As is diagrammatically illustrated in Figure 2, the SDC from the Switchlet is implemented within the ATM switch but could, as stated above, be implemented outside the switch. If the current version of Ipsilon's GSMP (General Switch Management Protocol) is used instead (see P Newman et al, Ipsilon's General Switch Management Protocol Specification Version 1.1, IETF RFC 1987, August 1996), it would be necessary for the CIN to control all the resources of its switch which would then have to be used for IP traffic only. If future versions of GSMP allow the partition of switching resources among different control architectures, then SIAM could use GSMP instead of Ariel.

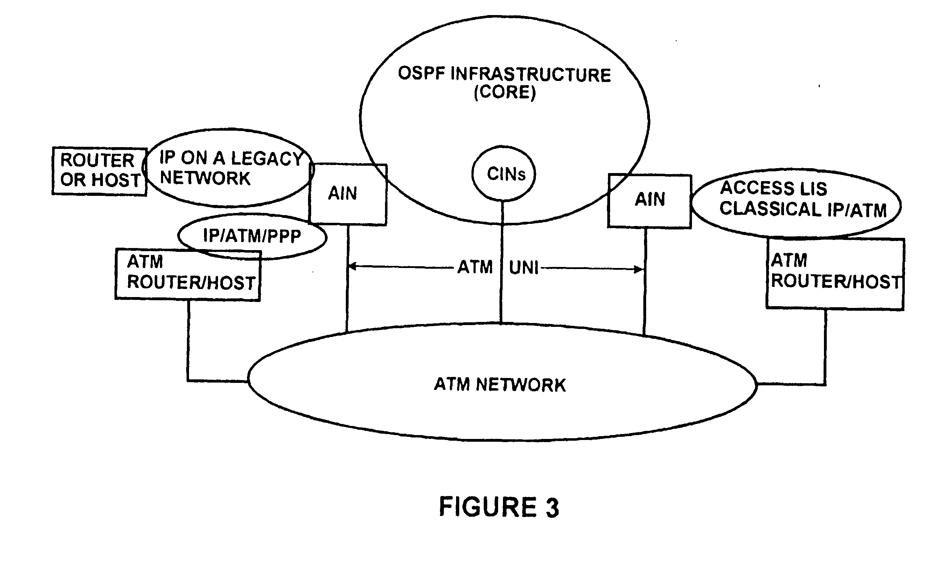

As stated above, SIAM is used for inter-subnet communication. Intra-subnet communication at the access relies on other IP/ATM methods, for example, the Classical IP/ATM method (RFC 1577), IP/PPP/ATM etc.. As is diagrammatically illustrated in Figure 3 of the accompanying drawings, in the form of a blocked diagram, one of the IP routing protocols will run in the Core Network, for example, the OSPF protocol can run on the pre-configured VPCs using the point-to-multipoint interface, or the Designated Router approach.

The manner in which SIAM nodes, AIN and CIN, operate will now be described with reference to the accompanying drawings.

In the case of AINs, each AIN maintains a labelling table and a standard IP forwarding table filled by the IP routing protocol. Each entry in the labelling table includes a subnet address, the outgoing VC (VPI/VCI) to reach that subnet and a timer for the VC. The timer is restarted whenever IP packets are sent on the VC. Therefore, entries in the labelling table are maintained on a flow basis (using timeouts) rather than at a packet level.

Thus, in operation, i.e. access side to core network/access. SIAM includes the following steps:
1. An IP packet received from the IP/ATM host is reassembled. As illustrated in Figure 1, packets may also arrive through non ATM interfaces;
2. TTL (Time To Live) is decremented by 1 and the packet is discarded if the result reaches zero. The IP header checksum is computed;
3. A check is made to determine whether the destination subnet is also supported by the AIN. If it is supported by AIN, the packet is sent to that subnet. If not so supported, the method progresses to step 4;
4. In the event that the destination subnet is not supported by the AIN, the labelling table is consulted to find if there is an ATM VC already in existence towards the same destination subnet. If an existing ATM VC is identified, the AIN hashes on the subnet address, sends the packet on the identified VC and restarts its timer. If an existing ATM VC cannot be identified, the method progresses to step 5;
5. In the event that an existing ATM VC is not identified, the IP forwarding table is consulted to find the next hop on the path to the destination subnet. The AIN then finds a free VCI from the VPC to that hop (for example, CIN). The packet will be sent on the VC (i.e. the chosen VCI from the VPC to the next hop). An entry in the labelling table is created containing the destination subnet address and the VC. The entry's timer is also started with a VC lifetime value (parameterized).

The VC multiplexing (null encapsulation) of RFC 1483 is used to encapsulate IP packets sent on the ATM VCs.

When a VC timer times out, the corresponding VC entry is purged from the labelling table. However, the VC does not become available immediately, but is cached for a while. By doing so, all the involved VCs at the path downstream are forced to time out too.

If rerouting occurs, the affected subnet addresses found in the labelling table are assigned new VCs, based on the new routes, and the old VCs become free after being timed out.

As for the core network side to access:
1. The AIN listens to the VPCs set up to it;
2. Cells coming from the core network are reassembled into IP packets;
3. Computations are performed on TTL and header checksum: and
4. Valid packets are then routed towards the hosts/routers attached to the access network.

In the case of CINs, each CIN also maintains a labelling table and a standard IP forwarding table. Each entry of the labelling table includes a subnet address, an outgoing ATM VC to reach that subnet and the incoming VC on which the packets arrive. A VC timer is set for each entry and it is restarted whenever packets are received on the incoming VC. When an incoming VC has not been active during its lifetime, its corresponding outgoing VC will become free and will be at the disposal of other flows. As with the AIN, the VC does not become free directly, thus forcing the VCs on the downstream hops to time out too.

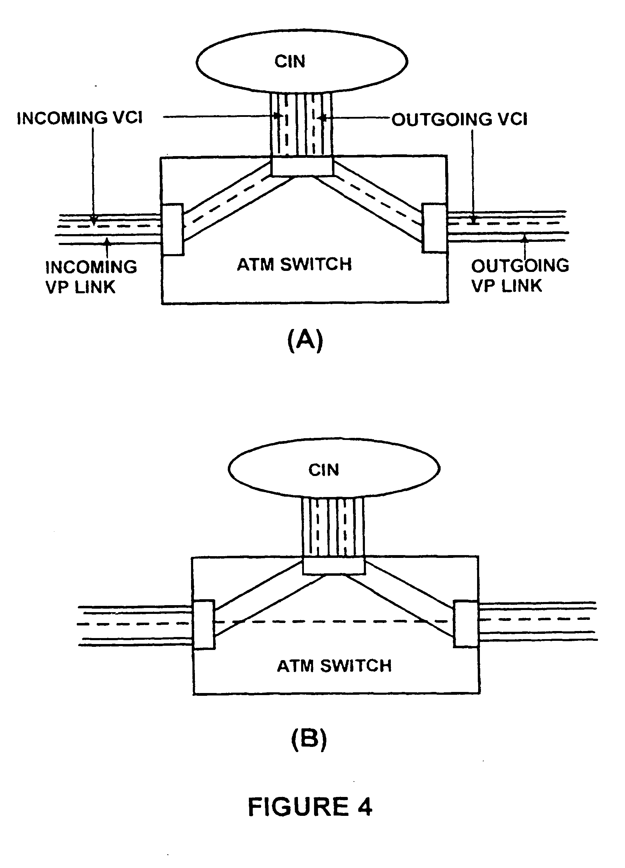

Each CIN operates as follows:
1. The CIN listens to the VPCs set up to it. An IP packet received on a VCI of one of these VPCs is reassembled retrieving the IP packet;
2. The TTL is decremented and IP header is calculated;
3. The labelling table is consulted to determine (for example, by hashing on the incoming VC) if there is an outgoing VC already in existence to the same destination subnet. This indicates that the incoming and outgoing VCs have not yet been cross-connected (see Figure 4(A) of the accompanying drawings). If an existing outgoing VC is identified, the CIN sends the packet on the outgoing VC and restarts its timer. If an existing outgoing VC cannot be identified, the method progresses to step 4;
4. In the event that an outgoing VC cannot be identified, the IP forwarding table is consulted to find the next hop on the path toward the destination subnet. The CIN then finds a free VCI from the VPC to that hop. An entry in the labelling table is created containing the destination subnet address, the incoming VC and the outgoing VC, i.e. the chosen VCI on the VPC to the next hop. It then sets the outgoing VC timer for the newly created entry. The CIN sends the packet on the outgoing VC. It then cross-connects the incoming and the outgoing VCs through use of the Ariel interface. The VCIs of the incoming and outgoing VP links (between the CIN's switch and its two neighbours) are actually cross- connected (see Figure 4(B) of the accompanying drawings). Thereafter, all cells received on the incoming VC are forwarded to the outgoing VC directly in the ATM switch, as shown in Figure 4(B).

By using the Ariel interface (see Figure 2), the CIN periodically monitors its cross-connected VCs in order to disconnect the idle ones. If it finds an incoming VC that has not been active during its lifetime, the corresponding VC entry is purged from the labelling table. The outgoing VC is put back in the labelling table as a free VC and finally the incoming VC is cross-connected back to the CIN (the VP link on the CIN interface - see Figure 4(A) of the accompanying drawings). If cells are received on one incoming VC, its timer is restarted.

If rerouting occurs, the affected subnet addresses found in the labelling table are assigned new VCs based on the new routes and the old VCs become free after being timed out.

As stated above, CINs perform flow classification based on source and destination subnet addresses. Since the AINs normally serve more than one access subnet and aggregate the traffic from all their access subnets into one VC toward one destination subnet, the classification is based on a number of access subnets and one destination subnet.

CINs can also be defined to perform flow classification based on destination subnet addresses only, achieving VC conservation and a smaller number of entries in a CIN's labelling table. For this purpose, the ATM switch must perform VC merging, i.e. multipoint-to-point, which is not, at the present time, a standard function of an ATM switch. It thus becomes a "packet switch". The operation of CINs also becomes rather complex.

The merging of an incoming CV of an ATM switch with the outgoing CV is diagrammatically illustrated, in the form of a block diagram, in Figure 5 of the accompanying drawings.

Each entry of the labelling table of the CIN contains:
- a list of all the incoming VCs, i.e. the merged VCs;
- the outgoing VC toward the destination subnet;
- the destination subnet address; and
- VC timers, one for each incoming VC.

The outgoing VC is used by the CIN during the merging process for new incoming VCs and is established when a new entry is created in the labelling table.

Each CIN operates as follows:
1. The CIN listens to the Virtual Path Connections (VPCs) set-up to it; an IP packet received on a VCI of one of these VPCs is retrieved;
2. The TTL is decremented and the IP header checksum is calculated;
3. The labelling table of the CIN is consulted to determine if there is an outgoing VC already in existence to the same destination subnet to which the IP packet has to be sent.
4. If an existing outgoing VC is identified, the CIN sends the IP packet on the identified outgoing VC for the subnet and, by using the Ariel interface, the CIN merges the incoming VC to the outgoing VC to the subnet. The CIN also adds the incoming VC (if it is not already there) to the list of incoming VCs and starts a timer for it.
5. In the event that there is no entry for the destination subnet, i.e. an existing outgoing VC cannot be identified, the method progresses to step 6;
6. In the absence of an existing outgoing VC, the CIN consults the IP forwarding table to find the next hop on the path to the destination subnet. The CIN then finds a free VCI from the VPC to that hop and an entry in the labelling table is created containing:
   - the destination subnet address;
   - the incoming VC (first in the VC list); and
   - the outgoing VC (the chosen VCI on the VPC to the next hop).
7. The CIN then sends the packet on the outgoing VC. By using the Ariel interface, the CIN merges the incoming VC to the outgoing VC. It also starts a timer for the incoming VC. After this, all cells received on the incoming VC are forwarded to the outgoing VC directly in the ATM switch, as shown in Figure 5.

The CIN periodically monitors the incoming VCs in order to disconnect the idle ones. If it finds a VC that has not been active during its lifetime, the VC is purged from the VC list and is cross-connected back to the CIN. If the VC list becomes empty, the outgoing VC is returned as a free one and the entry for the subnet is deleted from the labelling table. If cells are received on one incoming VC, its timer is restarted.

If rerouting occurs, the affected subnet addresses found in the labelling table are assigned new VCs based on the new routes and the old VCs are put back as free ones after being timed out. The incoming VCs will also be merged to the new outgoing VC.

Quality of Service (QoS) support for the system could be based on the use of RSVP (see R Braden, L Zhan, S Berson, S Herzog, S Jamin, Resource ReServation Protocol (RSVP) - Version 1 Functional Specification, draft-ielf-rsvp-spec-15,txt, May 27, 1997).

The IP-ATM service mapping, i.e. choosing the ATM service categories for the integrated service classes, and VC management, i.e. mapping RSVP sessions to ATM VCs, are performed at the AINs. RSVP merging is also implemented at the AINs. On the other hand, CINs do not support RSVP. The RSVP messages are transported and treated within the Core Network as best effort traffic. In other words, CINs are non-RSVP routers. Used this way, the scalability problem of RSVP in Core Networks is avoided.

The manner in which RSVP is implemented on SIAM is not addressed, in great detail, by this patent specification. However, for the purpose of the present invention, it should be noted that, when an AIN receives a Resv message from a host, it adds its ATM address to the message and sends it upstream toward the source. When the source's AIN receives the Resv message, it performs VC management by setting-up an SVC to the receiver's AIN using the ATM address carried by the Resv message.

As an interim solution, a simplified collection of QoS can be supported. Besides best effort, a guaranteed service class is also provided. The best effort is mapped onto the ATM UBR (Unspecified Bit Rate) extended with some packet discard mechanism, for example, early packet discard. The manner in which best effort is implemented with SIAM is outlined in the preceding description.

For the guaranteed service, CBR VPCs are set-up in parallel to UBR VPCs. AINs assign service classes to flows according to some policy control that may be based on source subnets. In case of the guaranteed service, AINs also indicate the data rate assigned to each flow by using the type of service field of the IP packet header.

A CIN, on receipt of a packet on a VC of the type CBR:
- first finds a free outgoing CBR VC toward the destination;
- allocates the required data rate based on the type of service value;
- sends the packet on the outgoing VC; and
- finally, cross-connects the incoming and outgoing VCs at the ATM switch.

As for IP multicasting, the known approaches for the access side can be implemented. In the case of Classical IP/ATM in the access, intra-LIS multicasting can be based on the MARS approach (see G Armitage, Support for Multicast over UNI 3.0/3.1 based ATM Networks, RFC 2022, November 1996). In case of using IP/PPPIATM or other known methods, the AIN functions as a multicast router supporting IGMP (Internet Group Management Protocol).

Some CINs function as multicast routers and run PIM (Protocol Independent Multicast) of RFC 2117 (see D Estrin et al, Protocol Independent Multicast-Sparse Mode (PIM-SM): Protocol Specification, RFC 2117, June 1997). PIM is also used for inter-LIS multicast communication where the AINs become multicast routers member of the multicast groups found at the access. As a first step, multicasting within the Core Network is not supported by short-cut VCs which are introduced later. Furthermore, the multicast routers are interconnected via permanent VCs,

As for interworking with ATM, conventional routers and hosts, host communicate with their AINs using existing IP/ATM methods implying that SIAM is transparent for the hosts.

The AINs can also communicate with hosts and routers based on legacy networks, for example, Ethernet.

AINs and CINs interconnect with ATM switches using the UNI interface. AINs are IP/ATM routers extended with flow aggregation capabilities. The same applies to CINs that implement both flow aggregation and VC cross-connection based on, for example, the Switchlet approach that enables the ATM switches to be used also for other applications other than IP.

It will be seen from the foregoing description of the present invention that SIAM:
- provides an IP/ATM mechanism that requires minor changes to the current IP/ATM infrastructure;
- is independent from the IP routing protocol used;
- does not require the use of any label distribution protocol which characterizes the existing methods, for example, IP switching, Tag switching, and CSR;
- provides low latency transport of IP best effort traffic; and
- can support QoS and multicasting.

It will also be seen from the foregoing description that, within the Core Network, where there is a high level of traffic aggregation and less dynamic behaviour than the edges, SIAM makes use of permanent VPCs that are quite sufficient to interconnect a limited number of CINs but a high number of access subnets. As a result, the connection set-up time is minimized and there is no need for any time-consuming address resolution. At the access, where the largest number of nodes reside, for example, hosts and AINs, communication is less static and SVCs are, therefore, used to make efficient use of access network resources. SVCs can also support RSVP where the IP-ATM service mapping and VC management are performed at AINs.

SIAM provides traffic aggregation based on destination subnet addresses and hence achieving a scalable architecture. It is both traffic driven as well as topology driven meaning that ATM VCs are set-up when they are first needed, but that VPs between CINs are set up based on topological considerations.

It will be readily understood by persons skilled in the art that SIAM can be used to build efficient public broadband IP/ATM networks.

SIAM follows the current trend in the industry focussing on the cut-through of the IP layer processing. However, SIAM has a simpler architecture because it does not require the use of any label distribution protocol which, as stated above, characterizes existing methods.

## Claims

1. An ATM transmission system for transmitting IP data, which ATM transmission system includes a core network of ATM switches and is adapted to handle inter-subnet communications, **characterised in that** said core network includes access IP/ATM nodes, hereinafter abbreviated to AINs, and core IP/ATM nodes, hereinafter abbreviated to CINs, for handling said inter-subnet communications, **in that** each AIN is attached to an ATM switch of the core network through an ATM User-Network Interface, hereinafter abbreviated to UNI, and is adapted to perform IP data flow classification and labelling for facilitating mapping of IP data flows to ATM Virtual Circuits, hereinafter abbreviated to VCs, and to communicate with IP/ATM hosts and routers, **in that** each CIN is attached to an ATM switch of the core network through an ATM UNI and is adapted to perform routing and labelling, **in that** said AINs and CINs are interconnected through Virtual Path Connections, hereinafter abbreviated to VCPs, and **in that** permanent VCPs are set-up between adjacent CINs.

2. An ATM transmission system, as claimed in claim 1, **characterised in that** said AINs are adapted to communicate with non-ATM hosts.

3. An ATM transmission system, as claimed in claim 2, **characterised in that** said AINs are adapted to communicate with non-ATM hosts using Ethernet.

4. An ATM transmission system, as claimed in any preceding claim, **characterised in that** said inter-subnet communications are effected on a hop-by-hop basis, and **in that** said ATM transmission system is adapted to map each IP data flow into an ATM Virtual Circuit for each hop, between nodes, on the communication path towards a destination subset.

5. An ATM transmission system, as claimed in claim 4, **characterised in that** the ATM VC for each hop between nodes is a VCI selected from a VPC connecting the two nodes.

6. ATM transmission system, as claimed in any preceding claim, **characterised in that** each AIN is adapted, on receipt of an IP data packet from an IP/ATM host for transmission to a destination subnet, to reassemble the IP data packet, decrement a TTL (Time To Live) timer, discarding the IP data packet if the timer reaches zero, compute the IP data packet header checksum, and check whether the destination subnet is supported by the AIN and, if so, send the IP data packet on that subnet.

7. An ATM transmission system, as claimed in claim 6, **characterised in that** each AIN includes, and is adapted to maintain, a labelling table and a standard IP forwarding table, the entries of which are completed by an IP routing protocol.

8. An ATM transmission system, as claimed in claim 7, **characterised in that** each entry in said labelling table includes a subnet address, the outgoing VC to reach the subnet, and a timer for the VC, and **in that** the timer is adapted to be started whenever IP packets are sent on the VC.

9. An ATM transmission system, as claimed in any of claims 6 to 8, **characterised in that**, in the event that the destination subnet is not supported by the AIN, said AIN is adapted to identify an existing ATM VC towards said destination subset and to send the IP data packet on an identified existing ATM VC.

10. An ATM transmission system, as claimed in claim 9, **characterised in that**, in the event that an existing ATM VC is not identified, said AIN is adapted to identify the next hop on the path to the destination subnet, by consulting its forwarding table, and to chose, and send the IP packet on, a free VCI from the VPC to the next hop, and **in that** said AIN is adapted to update its labelling table by making an entry containing the destination subnet address and the chosen VC, and to restart the entry's timer, said timer having a lifetime value for the VC.

11. An ATM transmission system, as claimed in claim 10, **characterised in that** said next hop on the path to the destination subnet is a CIN.

12. An ATM transmission system, as claimed in any one of the preceding claims**, characterised in that** each AIN is adapted to listen to the VPCs to which it is set up, to reassemble the cells coming from the core network into IP packets, to perform computations on TTL and header checksum, and to route valid packets towards ATM hosts/routers attached to an access network.

13. An ATM transmission system, as claimed in any one of the preceding claims, **characterised in that** each CIN is adapted to:
- listen to the VPCs to which it is set up;
- retrieve an IP packet from a cell received on a VCI of one of said VPCs;
- decrement a TTL and compute the IP packet header checksum;
- consult its labelling table to determine if there is an outgoing VC already in existence to a destination subnet to which the IP packet is to be sent, and
- if an existing outgoing VC is identified, send the IP packet on that VC and restart the VC's timer.

14. An ATM transmission system, as claimed in claim 13, **characterised in that**, in the event that an existing outgoing VC is not identified, said CIN is adapted to identify the next hop on the path towards the destination subnet by consulting its IP forwarding table, and to chose a free VCI from the VPC to the next hop, **in that** said CIN is adapted to update its labelling table by making an entry containing the destination subnet address, the incoming VC, the outgoing VC and the free VCI chosen from the VPC to the next hop, and **in that** said CIN is adapted to set the VC timer for the newly created entry in said labelling table, send the IP packet on the outgoing VC and cross-connect the VC incoming to, and the VC outgoing from, its ATM switch, all cells thereafter received on said incoming VC being forwarded to said outgoing VC within said ATM switch.

15. An ATM transmission system, as claimed in claim 14, **characterised in that** said CIN is adapted to control said cross-connection using Switchlets, an Ariel interface being provided between said ATM switch and said CIN for cross-connecting said incoming and outgoing VCs of said ATM switch.

16. An ATM transmission system, as claimed in claim 15, **characterised in that** said cross-connected VCs are the VCls of the incoming and outgoing Virtual Path (VP) links between said CIN's ATM switch and its two neighbouring ATM switches, one on an input side of, and the other on an output side of, said CIN's ATM switch.

17. An ATM transmission system, as claimed in any of claims 14 to 16, **characterised in that** said CIN is adapted to periodically monitor the cross-connected VCs in order to disconnect any VC found to be idle,

18. An ATM transmission system, as claimed in claim 17, **characterised in that** an Ariel interface is provided between said CIN and its ATM switch, and **in that** said CIN is adapted to use said Ariel interface to periodically monitor the cross connected VCs.

19. An ATM transmission system, as claimed in claim 17, or claim 18, **characterised in that**, in the event that an incoming VC is found to be inactive, said CIN is adapted to purge the corresponding outgoing VC from its labelling table, the corresponding incoming VC being cross-connected back to the CIN via a VP link on the CIN/ATM switch interface, and **in that** said CIN is adapted to re-enter the purged outgoing VC into its labelling table as a free VC.

20. An ATM transmission system, as claimed in any of claims 13 to 19, **characterised in that** each entry in a CINs labelling table contains:
- a list of all incoming, merged, VCs:
- the outgoing VC towards a destination subnet, said outgoing VC being used by the CIN during the merging of new incoming VCs and is established when a new entry is created in the labelling table;
- the destination subnet address; and
- VC timers, one for each incoming VC.

21. An ATM transmission system, as claimed in claim 20, **characterised in that** each CIN is adapted to merge a new incoming VC with an outgoing VC, each CIN being adapted to listen to the VPCs to which it is set up and to:
- retrieve an IP packet received on a VCI of one of said VPCs
- decrement the TTL and compute the IP packet header checksum;
- consult its labelling table to determine if there is an outgoing VC already in existence to the destination subnet to which the retrieved IP packet is to be sent;
- if an existing outgoing VC is identified, send the IP packet on that VC to the destination subnet, the CIN merging the incoming VC to the outgoing VC to the subnet; and
- in the event that the incoming VC is not included in the list of incoming VCs in its labelling table, add it to said labelling table.

22. An ATM transmission system, as claimed in claim 21, **characterised in that**, in the event that an existing outgoing VC is not identified, each CIN is adapted to find the next hop on the path towards the destination subnet by consulting its IP forwarding table and to chose a free VCI from the VPC to the next hop, **in that** said CIN is adapted to update its labelling table by making an entry containing the destination subnet address, the incoming VC, first in the VC list, the outgoing VC and the free VCI chosen from the VPC to the next hop, and **in that** said CIN is adapted to send the IP packet on the outgoing VC, to merge the incoming VC to the outgoing VCs using a CIN/ATM switch interface and to start a timer for the incoming VC, all cells thereafter received on said incoming VC being forwarded to the outgoing VC within said ATM switch.

23. An ATM transmission system, as claimed in any of claims 14 to 16, **characterised in that** each CIN is adapted to periodically monitor the cross-connected/merged VCs in order to disconnect any VC found to be idle.

24. An ATM transmission system, as claimed in claim 23, **characterised in that**, in the event that an incoming VC is found to be inactive, said CIN is adapted to purge the corresponding outgoing VC from its labelling table, the incoming VC being cross-connected back to the CIN via a VP link on the CIN/ATM switch interface, and **in that**, in the event that the VC list becomes empty, said CIN is adapted to return the purged outgoing VC to its labelling table, and to delete the entry for the subnet from the labelling table.

25. An ATM transmission system as claimed in any of claims 13 to 24, **characterised in that**, in the event of rerouting of an IP packet, the CIN is adapted to assign new VCs to the affected subnet addresses in its labelling table, based on new routes for the IP packet, the old VCs, after being timed out, being re-entered in the labelling table as free VCs.

26. An ATM transmission system, as claimed in any preceding claim, **characterised in that** said system is adapted to provide Quality of Service (QoS) support by setting up CBR VPCs in parallel to UBR VPCs; **in that** each AIN is adapted to assign service classes to data flows and give an indication of the data rate assigned to each flow using the type of service field in the IP packet header, and **in that** each CIN is adapted, on receipt of an IP packet on a CBR VC, to first find a free outgoing CBR VC towards the destination subnet, allocate a required data rate based on the type of service value, send the IP packet on the free outgoing CBR VC, and finally, cross-connect the incoming and outgoing VCs at its ATM switch.

27. A method for transmitting IP data over an ATM transmission system having a core network including a number of ATM switches, said method handling inter-subnet communications, on a hop-by-hop basis, **characterised by** the following steps:
- effecting said inter-subnet communications by means of access IP/ATM nodes, hereinafter abbreviated to AINs, and core IP/ATM nodes, hereinafter abbreviated to CINs, which are included in said core network;
- attaching each AIN to an ATM switch of the core network through an ATM User-Network Interface, hereinafter abbreviated to UNI;
- attaching each CIN to an ATM switch of the core network through an ATM UNI;
- interconnecting said AINs and CINs via Virtual Path Connections, hereinafter abbreviated to VCPs;
- setting up permanent VCPs between adjacent CINs;
- each AIN communicating with an IP/ATM host and performing IP data flow classifcation and labelling;
- each CIN performing routing and labelling;
- an AIN receives an IP data packet from an IP/ATM host, reassembles the IP data packet, and transmits the IP data packet to a destination subnet;
- decrementing a Time To Live timer, hereinafter abbreviated to TTL timer, by 1 and discarding the IP data packet if the TTL timer reaches zero;
- computing the IP data packet header checksum; and
- checking whether the destination subnet is supported by the AIN and, if so, sending the IP data packet on that subnet.

28. A method, as claimed in claim 27, **characterised by** said AIN maintaining a labelling table and a standard IP forwarding table filled by an IP routing protocol.

29. A method, as claimed in claim 28, **characterised by** each entry in said labelling table including:
- a subnet address;
- the outgoing VC to reach the subnet; and
- a timer for the VC, the timer being started whenever IP packets are sent on the VC.

30. A method, as claimed in claim 29, **characterised by** the steps of:
- in the event that the destination subnet is not supported by the AIN, consulting the labelling table of said AIN to determine if there is an ATM VC already in existence towards the destination subset to which the packet is to be sent; and
- if an existing ATM VC is identified, said AIN:
- hashes on the subnet address;
- sends the packet on the identified VC; and
- restarts the timer.

31. A method, as claimed in claim 30, **characterised by** the steps of:
- consulting the forwarding table of said AIN, in the event that an existing ATM VC is not identified, to find the next hop on the path to the destination subnet;
- finding a free VCI from the VPC to the next hop;
- sending the IP packet on a chosen VCI;
- creating, in the labelling table of said AIN, an entry containing the destination subnet address and the VC; and
- restarting the entry's timer, said timer having a lifetime value for the VC.

32. A method, as claimed in claim 31, **characterised by** said next hop on the path to the destination subnet being a CIN.

33. A method, as claimed in any of claims 30 to 32, **characterised by** the step of using VC multiplexing of IETF RFC 1483 to encapsulate IP packets sent on said ATM VCs

34. A method as claimed in any of claims 29 to 33, **characterised by** the steps of:
- purging a VC entry from the labelling table of an AIN, in the event that a corresponding VC timer times out, the purged VC being cached for a period of time before becoming available for use;
- forcing all downstream VCs, in the path to the destination subnet, to be timed out; and
- if rerouting occurs to new routes, the affected subnet addresses found in the labelling table are assigned new VCs, based on the new routes, the old VCs becoming free after being timed out.

35. A method, as claimed in any of claims 27 to 34, **characterised by** the steps of:
- listening to the VPCs set up to an AIN;
- reassembling the cells coming from the core network into IP packets;
- performing computations on TTL and header checksum; and
- routing valid packets towards ATM hosts/routers attached to an access network.

36. A method, as claimed in any of claims 27 to 35, **characterised by** the steps of:
- listening to the VPCs set up to a CIN;
- reassembling a cell, received by the CIN on a VCI of one of said VPCs, to retrieve an IP packet;
- decrementing the TTL and computing the IP packet header checksum;
- consulting a labelling table of the CIN to determine if there is an outgoing VC already in existence to a destination subnet to which the IP packet is to be sent; and
- if an existing outgoing VC is identified, the CIN sends the IP packet on that VC and restarts its timer.

37. A method, as claimed in claim 36, **characterised by** the steps of:
- consulting an IP forwarding table of the CIN, in the event that an existing outgoing VC is not identified, to find the next hop on the path towards the destination subnet;
- finding a free VCI from the VPC to the next hop;
- creating, in the labelling table of said CIN, an entry containing the:
- destination subnet address;
- the incoming VC;
- the outgoing VC, the free VCI chosen from the VPC to the next hop;
- setting the VC timer for the newly created entry in the CIN's labelling table;
- sending the IP packet on the outgoing VC; and
- cross-connecting the incoming and outgoing VCs of the CIN's ATM switch, all cells thereafter received on said incoming VC being forwarded to said outgoing VC within said ATM switch.

38. A method, as claimed in claim 37, **characterised by** the step of cross-connecting said incoming and outgoing VCs of said ATM switch using an Ariel interface between said switch and said CIN.

39. A method, as claimed in claim 38, **characterised by** said cross-connected VCs being the VCIs of the incoming and outgoing Virtual Path, hereinafter abbreviated to VP, links between the CIN's ATM switch and its two neighbouring ATM switches, one on an input side of, and the other on an output side of, said CIN's ATM switch.

40. A method, as claimed in any of claims 37 to 39, **characterised by** said CIN periodically monitoring the cross connected VCs in order to disconnect any VC found to be idle.

41. A method, as claimed in claim 40, **characterised by** using an Ariel interface between said CIN and its ATM switch to periodically monitoring the cross connected VCs.

42. A method, as claimed in claim 40, or claim 41, **characterised by** the steps of:
- in the event that an incoming VC is found to be inactive, the corresponding outgoing VC is purged from the CINs labelling table;
- the outgoing VC is put back into the labelling table as a free VC; and
- the incoming VC is cross-connected back to the CIN via a VP link on the CIN/ATM switch interface.

43. A method, as claimed in any of claims 36 to 42, **characterised by** each entry in a CINs labelling table containing:
- a list of all incoming, merged, VCs.
- the outgoing VC towards a destination subnet, said outgoing VC being used by the CIN during the merging of new incoming VCs and is established when a new entry is created in the labelling table;
- the destination subnet address; and
- VC timers, one for each incoming VC.

44. A method, as claimed in claim 43, **characterised by** said merging of a new incoming VC with the outgoing VC including the steps of:
- each CIN listening to the VPCs set up to it, an IP packet received on a VCI of one of the VPCs being retrieved by the CIN;
- decrementing the TTL and computing the IP packet header checksum;
- consulting the CIN's labelling table to determine if there is an outgoing VC already in existence to the destination subnet to which the retrieved IP packet is to be sent;
- if an existing outgoing VC is identified, the CIN sends the IP packet on that VC to the destination subnet, the CIN merging the incoming VC to the outgoing VC to the subnet; and
- in the event that the incoming VC is not included in the list of incoming VCs in the CIN's labelling table, it is added to the table by the CIN.

45. A method, as claimed in claim 44, **characterised by** the steps of:
- consulting an IP forwarding table of the CIN, in the event that an existing outgoing VC is not identified, to find the next hop on the path towards the destination subnet;
- finding a free VCI from the VPC to the next hop;
- creating, in the labelling table of said CIN, an entry containing the:
- destination subnet address;
- incoming VC, first in the VC list;
- outgoing VC, the free VCI chosen from the VPC to the next hop;
- sending the IP packet on the outgoing VC; and
- merging the incoming VC to the outgoing VCs using the CIN/ATM switch interface and starting a timer for the incoming VC, all cells thereafter received on said incoming VC being forwarded to the outgoing VC within said ATM switch.

46. A method, as claimed in any of claims 37 to 45, **characterised by** said CIN periodically monitoring the cross connected/merged VCs using the CIN/ATM switch interface in order to disconnect any VC found to be idle.

47. A method, as claimed in claim 45. **characterised by** the steps of:
- in the event that an incoming VC is found to be inactive, the corresponding outgoing VC is purged from the CINs labelling table;
- the incoming VC is cross-connected back to the CIN via a VP link on the CIN/ATM switch interface; and
- if the VC list becomes empty, the outgoing VC is returned as a free VC and the entry for the subnet is deleted from the CIN's labelling table.

48. A method as claimed in any of claims 36 to 47, **characterised by**, in the event of rerouting of an IP packet, the affected subnet addresses in the CIN's labelling table are assigned new VCs based on new routes for the packet, and the old VCs are put back as free VCs, after being timed out.

49. A method, as claimed in any of claims 27 to 48, **characterised by** providing Quality of Service support by setting up CBR VPCs in parallel to UBR VPCs; by each AIN assigning service classes to data flows and giving an indication of the data rate assigned to each flow using the type of service field in the IP packet header; and by a CIN, on receipt of an IP packet on a CBR VC:
- first finding a free outgoing CBR VC towrads the destination subnet;
- allocating the required data rate based on the type of service value;
- sending the IP packet on the free outgoing CBR VC; and
- finally, cross-connecting the incoming and outgoing VCs at the CIN's ATM switch.

50. An IP/ATM network including an ATM transmission system as claimed in any of claims 1 to 26, or adapted to use a method as claimed in any of claims 27 to 49.

## Patentansprüche

1. ATM-Übertragungssystem zum Übertragen von IP-Daten, welches ATM-Übertragungssystem ein Kernnetz von ATM Schaltern einschließt und dazu ausgebildet ist, Kommunikationen zwischen Teilnetzen zu handhaben, **dadurch gekennzeichnet, dass** das Kernnetz Zugangs-IP/ATM-Knoten, im Folgenden als AINs abgekürzt, und Kern-IP/ATM-Knoten, im Folgenden als CINs abgekürzt, einschließt, um Kommunikationen zwischen Teilnetzen zu handhaben, dass jeder AIN an einen ATM-Schalter des Kernnetzes durch eine ATM-Benutzernetzschnittstelle, im Folgenden als UNI abgekürzt, angeschlossen ist und dazu ausgebildet ist, IP-Datenflussklassifikation und Kennzeichnung durchzuführen, um die Abbildung von IP-Datenflüssen zu virtuellen ATM-Schaltungen, im Folgenden als VCs abgekürzt, zu erleichtern, und mit IP/ATM-Hosts und Routern zu kommunizieren, dass jeder CIN an einen ATM-Schalter des Kernnetzes durch eine ATM-UNI angeschlossen ist und dazu ausgebildet ist, Leitwegführung und Kennzeichnung durchzuführen, und dass die AINs und die CINs durch virtuelle Pfadverbindungen, im folgenden als VCPs abgekürzt, miteinander verbunden sind, und dass permanente VCPs zwischen benachbarten CINs eingerichtet sind.

2. ATM-Übertragungssystem nach Anspruch 1, **dadurch gekennzeichnet, dass** die AINs dazu ausgebildet sind, mit Nacht-ATM-Hosts zu kommunizieren.

3. ATM-Übertragungssystem nach Anspruch 2, **dadurch gekennzeichnet, dass** die AINs dazu ausgebildet sind, mit Nicht-ATM-Hosts unter Verwendung von Ethernet zu kommunizieren.

4. ATM-Übertragungssystem nach einem vorangehenden Anspruch, **dadurch gekennzeichnet, dass** die Kommunikationen zwischen Teilnetzen aufgrund von Sprung um Sprung bewirkt werden, und dass das ATM-Übertragungssystem dazu ausgebildet ist, jeden IP-Datenfluss in eine ATM virtuelle Schaltung für jeden Sprung zwischen Knoten auf dem Kommunikationsweg zu einen Bestimmungsteilsatz abzubilden.

5. ATM-Übertragungssystem nach Anspruch 4, **dadurch gekennzeichnet, dass** die ATM-VC für jeden Sprung zwischen Knoten eine VCI ist, die aus einer VPC ausgewählt ist, die die beiden Knoten verbindet.

6. ATM-Übertragungssystem nach einem vorangehenden Anspruch, **dadurch gekennzeichnet, dass** jeder AIN dazu ausgebildet ist, bei Empfang eines IP-Datenpaketes von einem IP/ATM-Host für Übertragung zu einem Bestimmungsteilnetz das IP-Datenpaket wieder zusammenzusetzen, eimen Tal-Zeitgeber (Zeit zu Leben) zu vermindern, dass IP-Datenpaket zu verwerfen, wenn der Zeitgeber Null erreicht, die Prüfsumme des IP-Datenpaketkopfes zu berechnen und zu prüfen, ob das Bestimmungsteilnetz durch den AIN unterstützt wird, und, falls dies der Fall ist, das IP-Datenpaket auf dem Teilnetz zu senden.

7. ATM-Übertragungssystem nach Anspruch 6, **dadurch gekennzeichnet, dass** jeder AIN einschließt und dazu ausgebildet ist, aufrecht zu erhalten, eine Kennzeichnungstabelle und eine Standard-IP-Weiterleitungstabelle, deren Einträge durch ein IP-Leitwegprotokoll vervollständig werden.

8. ATM-Übertragungssystem nach Anspruch 7, **dadurch gekennzeichnet, dass** jeder Eintrag in der Kenuzeichnu-agstabelle eine Teilnetzadresse, die Ausgangs-VC, um das Teilnetz zu erreichen, und einen Zeitgeber für die VC einschließt, und dass der Zeitgeber dazu ausgebildet ist, jeweils gestartet zu werden, wenn IP-Pakete auf der VC gesendet werden.

9. ATM-Übertragungssystem nach einem der Ansprüche 6 bis 8, **dadurch gekennzeichnet, dass** im Falle, dass das Bestimmungsteilnets nicht durch den AIN unterstützt ist, der AIN dazu ausgebildet ist, eine existierende ATM-VC zu dem Bestinmungsteilsatz zu identifizieren und das IP-Datenpaket auf einer identifizierten existierenden ATM-VC zu senden.

10. ATM-Übertragungssystem nach Anspruch 9, **dadurch gekennzeichnet, dass** im Falle, dass eine existierende ATM-VC nicht identifiziert wird, der AIN dazu ausgebildet ist, den nächsten Sprung auf dem Pfad zum Bestimmungsteilnetz zu identifizieren, indem dessen Weiterleitungstabelle zu Rate gezogen wird, und eine freie VCI von der VPC zum nächsten Sprung zu wählen und darauf das IP-Paket zu senden, und dass der AIN dazu ausgebildet ist, seine Kennzeichnungstabelle dadurch zu aktualisieren, dass eine Eintragung vorgenommen wird, die die Bestimmungsteilnetzadresse und die gewählte VC enthält, und den Zeitgeber der Eintragung erneut zu starten, wobei der Zeitgeber einen Lebensdauerwert für die VC hat.

11. ATM-Übertragungssystem nach Anspruch 10, **dadurch gekennzeichnet, dass** der nächste Sprung auf dem Pfad zum Bestimmungsteilnetz ein CIN ist.

12. ATM-Übertragungssystem nach einem der vorangehenden Ansprüche, **dadurch gekennzeichnet, dass** jeder AIN dazu ausgebildet ist, die VPCs abzuhören, zu denen er eingerichtet ist, um die Zellen, die von dem Kernnetz kommen, erneut in IP-Pakete zusammenzusetzen, Berechnungen an TTL und Kopfsatzprüfsumme durchzuführen und die gültigen Pakete zu ATM-Hosts/Routern zu leiten, die an einem Zugangsnetz angeschlossen sind.

13. ATM-Übertragungssystem nach einem der vorangehenden Ansprüche, **dadurch gekennzeichnet, dass** jeder CIN dazu ausgebildet ist, zu:
- die VPCs abzuhören, zu denen er eingerichtet ist;
- ein IP-Paket von einer Zelle abzurufen, das auf einer VCI einer der VPCs empfangen worden ist;
- einen TTL zu vermindern und die Prüfsumme des IP-Paketkopfes zu berechnen;
- eine Kennzeichnungstabelle zu Rate zu ziehen, um zu bestimmen, ob es eine bereits existierende Ausgangs-VC zu einem Bestimmungsteilnetz gibt, zu dem das IP Paket gesendet werden soll; und
- wenn eine existierende Ausgangs-VC identifiziert ist, das IP-Paket auf der VC zu senden und den Zeitgeber der VC erneut zu starten,

14. ATM-Übertragungssystem nach Anspruch 13, **dadurch gekennzeichnet, dass** im Fall, dass eine existierende Ausgangs-VC nicht identifiziert wird, der CIN dazu ausgebildet ist, den nächsten Sprung auf dem Pfad zum Bestimmungsteilnetz zu identifizieren, indem dessen IP-Weiterleitungstabelle zu Rate gezogen wird, und eine freie VCI von der VPC zum nächsten Sprung zu wählen, dass der CIN dazu ausgebildet ist, seine Kennzeichnungstabelle dadurch zu aktualisieren, indem eine Eintragung vorgenommen wird, die die Bestimmungsteilnetzadresse, die Eingangs-VC, die Ausgangs-VC und die freie VCI, die von der VPC zum -nächsten Sprung gewährt ist, enthält, und dass der CIN dazu ausgebildet ist, den VC-Zeitgeber für die neu geschaffene Eintragung in der Kennzeichnungstabelle einzustellen, das IP-Paket auf der Ausgangs-VC zu senden und die Eingangs-VC zu, und die Ausgangs-VC von ihrem ATM-Schalter kreuzweise zu verbinden, wobei alle Zellen, die danach auf der Eingangs-VC empfangen werden, zu der Ausgangs-VC innerhalb des ATM Schalters weitergeleitet werden.

15. ATM-Übertragungssystem nach Anspruch 14, **dadurch gekennzeichnet, dass** der CIN dazu ausgebildet ist, die kreuzweise Verbindung unter Verwendung von Switchlets zu kontrollieren, wobei eine Ariel-Schnittstelle zwischen dem ATM-Schalter und dem CIN vorgesehen ist, um die Eingangs-und Ausgangs-VCs des ATM-Schalters kreuzweise zu verbinden.

16. ATM-Übertragungssystem nach Anspruch 15, **dadurch gekennzeichnet, dass** die kreuzweise verbunden VCs die VCIs der ankommenden und abgehenden virtuellen Pfad (VP) Verbindungen zwischen dem ATM-Schalter des CINs und seiner beiden benachbarten ATM -chalter sind, einer auf der Eingangsseite und der andere auf der Ausgangsseite des ATM-Schalters des CINs.

17. ATM-Übertragungssystem nach einem der Ansprüche 14 bis 16, **dadurch gekennzeichnet, dass** der CIN dazu ausgebildet ist, periodisch die kreuzweise verbundenen VCs zu überwachen, um irgendeine VC zu trennen, von der festgestellt wird, das sie leer läuft.

18. ATM-Übertragungssystem nach Anspruch 17, **dadurch gekennzeichnet, dass** eine Ariel-Schnittstelle zwischen dem CIN und seinem ATM-Schalter vorgesehen ist und dass der CIN dazu ausgebildet ist, die Ariel-Schnittstelle zu verwenden, um periodisch die kreuzweise verbundenen VCs zu überwachen.

19. ATM-Übertragungssystem nach Anspruch 17 oder Anspruch 18, **dadurch gekennzeichnet, dass** im Falle, dass eine Eingangs-VC als inaktiv herausgefunden wird, der Ein dazu ausgebildet ist, die entsprechende Ausgangs-VC von seiner Kennzeichnungstabelle zu entfernen, wobei die entsprechende Eingangs-VC zurück zu dem CIN über eine VP-Verbindung auf der CIN-ATM-Schalterschnittstelle kreuzweise verbunden wird, und dass der CIN dazu ausgebildet ist, die entfernte Ausgangs-VC wieder in seine Kennxeichnungstabelle als freie VC einzutragen.

20. ATM-Übertragangssystem nach einem der Ansprüche 13 bis 19, **dadurch gekennzeichnet, dass** jede Eintragung in einer Kennt zeichnungstabelle cis enthält:
- eine Liste aller zusammengeführten Eingangs-VCs;
- die Ausgangs-VC zu einem Bestimmungsteilnetz, welche Ausgangs-VC durch den CIN während des Zusammenführen neuer Eingangs-VCs verwendet wird und eingerichtet wird, wenn eine neue Eintragung in der Kennzeichnungstabelle geschaffen wird,
- die Bestimmungsteilnetzadresse; und
- VC-Zeitgeber, einen für jede Eingangs-VC.

21. ATM-Übertragungssystem nach Anspruch 20, **dadurch gekennzeichnet, dass** jeder CIN dazu ausgebildet ist, eine neue Eingangs-VC mit einer Ausgangs-VC zusammenzuführen, wobei jeder CIN dazu ausgebildet ist, die VPCs abzuhören, zu denen er eingerichtet ist, und:
Ein IP-Paket abzurufen, das auf einer VCI einer der VPCs empfangen ist;
- den TTL zu vermindern und die Prüfsumme des IP-Paketkopfes zu berechnen;
- seine Kennzeichnungstabelle zu Rate zu ziehen, um zu bestimmen, ob es bereits eine Ausgangs-VC zum Bestimmungsteilnetz gibt, zu dem das abgerufene IP-Paket gesendet werden soll;
- wenn eine existierende Ausganqs-VC identifiziert wird, das IP-Paket auf der VC zum Bestimmungsteilnetz zu senden, wobei der CIN die Eing-angs-VC mit der Ausgangs-Ve zum Teilnetz zusammenführt; und
- im Falle, dass die Eingangs-VC nicht in der Liste von Eingangs-VCs in seiner Kennzeichnungstabelle eingeschlossen ist, sie zu der Kennzeichnungstabelle hinzuzufügen.

22. ATM-Übertragungssystem nach Anspruch 21, **dadurch gekennzeichnet, dass** im Falle, dass eine existierende Ausgangs-VC nicht identifiziert wird, jeder CIN dazu ausgebildet ist, den nächsten Sprung auf dem Pfad zum Bestimmungsteilnetz zu finden, indem die IP-Meiterleitungstabelle zu Rate gezogen wird, und eine freie VCI von der VPC zum nächsten Sprung zu wählen, dass der CIN dazu ausgebildet ist, seine Kennzeichnungstabelle dadurch zu aktualisieren, dass eine Eintragung vorgenommen wird, die die Bestimmungsteilnetzadresse, die Eingangs-VC, die erste in der VC-Liste, die Ausgangs-VC und die freie VCI enthält, die von der VPC zum nächsten Sprung gewählt ist, und dass der CIN dazu ausgebildet ist, das IP-Paket auf der Ausgangs-VC zu senden, die Eingangs-VC mit den Ausgangs-VCs unter Verwendung einer CIN/ATM-Schalterschnittstelle zusammenzuführen und einen Zeitgeber für die Eingangs-VC zu starten, wobei alle Zellen, die danach auf der Eingangs-VC empfangen werden, zur Ausgangs-VC innerhalb des ATM Schalters weitergeleitet werden.

23. ATM-Übertragungssystem nach einem der Ansprüche 14 bis 16, **dadurch gekennzeichnet, dass** jeder CIN dazu ausgebildet ist, periodisch die kreuzweise verbundenen/zusammengeführten VCs zu überwachen, um irgendeine VC zu trennen, von der festgestellt wird, dass sie leer läuft.

24. ATM-Übertragungssystem nach Anspruch 23, **dadurch gekennzeichnet, dass** im Falle, dass eine Eingangs-VC als inaktiv herausgefunden wird, der CIN dazu ausgebildet ist, die entsprechende Ausgangs-VC von seiner Kennzeichnungstabelle zu entfernen, wobei die Eingangs-VC kreuzweise zurück zum CIN über eine VP-Verbindung auf der CIN/ATM-Schalterschnittstelle verbunden wird, und dass in dem Fall, dass die VC-Liste leer wird, der CIN dazu ausgebildet ist, die entfernte Ausgangs-VC zu seiner Kennzeichnungstabelle zurückzuführen und die Eintragung für das Teilnetz von der Kennzeichnungstabelle zu entfernen.

25. ATM-Übertragungssystem nach einem der Ansprüche 13 bis 24, **dadurch gekennzeichnet, dass** im Falle, dass ein IP-Paket erneut leitfweggeführt wird, der CIN dazu ausgebildet ist, neue VCs zu den betroffenen Teilnetzadressen in seiner Kennzeichnungstabelle zuzuordnen, beruhend auf neuen Leitwegen für das IP-Paket, wobei die alten VCs, nachdem sie zeitlich abgelaufen sind, wieder in die Kennzeichnungstabelle als freie VCs eingetragen werden.

26. ATM-Übertragungssystem nach einem vorangehenden Anspruch, **dadurch gekennzeichnet, dass** das System dazu ausgebildet ist, Dienstqualitäts-Unterstützung (QoS) zu liefern, indem CBR-VPCs parallel zu UBR-VPCs eingerichtet werden, dass jeder AIN dazu ausgebildet ist, Dienstklassen zu Datenflüssen zuzuordnen und eine Anzeige der Datenrate zu geben, die jedem Fluss zugeordnet ist, unter Verwendung des Dienstfeldes des IP-Paketkopfes; und dass jeder CIN dazu ausgebildet ist, bei Empfang eines IP-Paketes auf einer CBR-VC eine erste freie Ausgangs-CBR-VC zum Bestimmungsteilnetz zu finden, eine erforderliche Datenrate beruhend auf dem Typ des Dienstwertes zuzuordnen, das IP-Paket auf der freien Ausgangs-CBR-VC zu senden und schließlich die Eingangs- und Ausgangs-VCs bei seinem ATM-Schalter kreuzweise zu vereinden.

27. Verfahren zum Senden von IP-Daten über ein ATM-Übertragungssystem, das ein Kernnetz einschließlich einer Anzahl von ATM-Schaltern hat, welches Verfahren Kommunikationen zwischen Teilnetzen aufgrund von Sprung um Sprung handhabt, **gekennzeichnet durch** die folgenden Schritte:
- Kommunikationen zwischen Teilnetzen mit Hilfe von Zugangs-IP/ATM-Knoten, im Folgenden als AINs abgekürzt, und Kern-IP/ATM-Knoten, im Folgenden als CINs abgekürzt, die in dem Kernnetz enthalten sind, zu bewirken;
- jeden AIN an einen ATM-Schalter des Kernnetzes **durch** eine ATM-Benutzernetzschnittstelle, im Folgenden als UNI abgekürzt, anzuschließen;
- jeden CIN an einen ATM-Schalter des Kernnetzes **durch** eine ATM-UNI anzuschließen;
- die AINs und CINs über virtuelle Pfadverbindungen, im Folgenden als VCPs abgekürzt; miteinander zu verbinden;
- permanente VCPs zwischen benachbarten CINs einzurichten;
- dass jeder AIN mit einem IP/ATM-Host kommuniziert und IP-Datenflussklassifizierung und -kennzeichnung durchführt;
- dass jeder CIN Leitwegführung und Kennzeichnung durchführt;
- dass ein AIN ein IP-Datenpaket von einem IP/ATM-Host empfängt, das IP-Datenpaket wieder zusammensetzt und das IP-Datenpaket zu einem Bestimmungsteilnetz sendet;
- dass ein Zeit zum Leben Zeitgeber, im Folgenden als TTL-Zeitgeber abgekürzt, um 1 vermindert wird, und das IP-Datenpaket verworfen wird, wenn der TTL-Zeitgeber Null erreicht;
- die Prüfsumme des IP-Datenpaketkopfes zu berechnen; und
- zu prüfen, ob das Bestimmungsteilnetz **durch** den AIN unterstützt wird, und, falls dies der Fall ist, das IP-Datenpaket auf diesem Teilnetz zu senden.

28. Verfahren nach Anspruch 27, **dadurch gekennzeichnet, dass** der AIN eine Kennzeichnungstabelle und eine Standard-IP Weiterleitungstabelle aufrechterhält, die durch ein IP-Leitwegprotokoll ausgefällt ist.

29. Verfahren nach Anspruch 28, **dadurch gekennzeichnet, dass** jede Eintragung in der Kennzeichnungstabelle einschließt:
- eine Teilnetzadresse;
- die Ausgangs-VC, um das Teilnetz zu erreichen; und
- einen Zeitgeber für die VC, wobei der Zeitgeber immer dann gestartet wird, wenn IP-Pakete auf der VC gesendet werden.

30. Verfahren nach Anspruch 29, **gekennzeichnet durch** die Schritte:
- im Falle, dass das Bestimmungsteilnetz nicht **durch** den AIN unterstützt wird, die Kennzeichnungstabelle des AIN zu Rate zu ziehen, um zu bestimmen, ob es bereits eine ATM-VC zu dem Bestimmungsteilsatz gibt, zu dem das Paket gesendet werden soll; und
wenn eine existierende ATM-VC identifiziert wird, so
- führt die AIN ein Hash auf der Teilnetzadresse durch;
- sendet die AIN das Paket zur identifizierten VC, und
- startet die AIN den Zeitgeber erneut.

31. Verfahren nach Anspruch 30, **gekennzeichnet durch** die Schritte:
- die Meiterleitungstabelle des AIN zu Rate zu ziehen, falls eine existierende ATM-VC nicht identifiziert wird, um den nächsten Sprung auf dem Pfad zum Bestimmungsteilnetz zu finden;
- eine freie VCI von der VPC zum nächsten Sprung zu finden;
- das IP-Paket auf einer ausgewählten VCI zu senden;
- in der Kennzeichnungstabelle des AIN eine Eintragung zu erzeugen, die die Bestimmungsteilnetzadresse und die VC enthält; und
- den Zeitgeber der Eintragung erneut zu starten, wobei der Zeitgeber einen Lebensdauerwert für die VC hat.

32. Verfahren nach Anspruch 31, **dadurch gekennzeichnet, dass** der nächste Sprung auf dem Pfad zum Bestimmungsteilnetz ein CIN ist.

33. Verfahren nach einem der Ansprüche 30 bis 32, **gekennzeichnet durch** den Schritt, VC-Multiplexierung von IETF RFC 1483 zu verwenden, um IP-Pakete einzukapseln, die auf den ATM-VCs gesendet werden.

34. Verfahren nach einem der Ansprüche 29 bis 33, **gekennzeichnet durch** die Schritte:
- eine VC-Eintragung von der Kennzeichnungstabelle eines AIN in dem Falle zu entfernen, dass ein entsprechender VC-Zeitgeber Zeitablauf erleidet, wobei die entfernte VC während einer Zeitperiode cache-gespeichert wird, bevor sie für Benutzung verfügbar wird;
- alle stromab angeordneten VCs im Pfad zum BestimmungsTeilnetz zu zwingen, dass sie Zeitablauf erleiden; und
- wenn eine neue Leitwegführung zu neuen Leitwegen auftritt, werden die betroffenen Teilnetzadressen, die in der Kennzeichnungstabelle gefunden werden, neuen VCs beruhend auf neuen Leitwegen zugeordnet, wobei die alten VCs frei werden, nachdem sie Zeitablauf erlitten haben.

35. Verfahren nach einem der Ansprüche 27 bis 34, **gekennzeichnet durch** die Schritte:
- die VPCs abzuhören, die zu einem AIN eingerichtet sind;
- die Zellen, die von dem Kernnetz kommen, erneut in IP-Pakete zusammenzusetzen;
- Berechnungen an TTL und Kopfsatzprüfsumme durchzuführen; und
- gültige Pakete zu ATM-Hosts/Routern zu leiten, die an ein Zugangsnetz angeschlossen sind.

36. Verfahren nach einem der Ansprüche 27 bis 35, **gekennzeichnet durch** die Schritte:
- die VPCS, die zu einem CIN eingerichtet sind, abzuhören;
- eine Zelle, die **durch** den CIN einer VCI einer der VPCs empfangen ist, erneut zusammenzusetzen, um ein IP-Paket abzurufen;
- den TTL zu vermindern und die Prüfsumme des IP-Paketkopfes zu berechnen;
- eine Kennzeichnungstabelle des CIN zu Rate zu ziehen, zu bestimmen, ob es bereits eine Ausgangs-VC zu einem Bestimmungsteilnetz gibt, zu dem das IP-Paket gesendet werden soll; und
- wenn eine existierende Ausgangs-VC identifiziert wird, sendet der CIN das IP-Paket auf dieser VC und startet den Zeitgeber erneut.

37. Verfahren nach Anspruch 36, **gekennzeichnet durch** die Schritte:
- eine IP-Weiterleitungstabelle des CIN in dem Falle zu Rate zu ziehen, dass eine existierende Ausgangs-VC nicht identifiziert wird, um den nächsten Sprung auf dem Pfad zum Bestimmungsteilnetz zu finden;
- eine freie VCI von der VPC zum nächsten Sprung zu finden;
- in der Kennzeichnungstabelle der CIN eine Eintragung zu schaffen, die enthält:
- die Bestimmungsteilnetzadresse;
- die Eingangs-VC;
- die Ausgangs-VC, die freie VCI, die von der VPC zum nächsten Sprung ausgewählt ist;
- den VC-Zeitgeber für die neu geschaffene Eintragung in der Kennzeichnungstabelle des CINs einzustellen;
- das IP-Paket auf der Ausgangs-VC zu senden; und
- die Eingangs- und Ausgangs-VCs des ATM-Schalters des CINs kreuzweise zu verbinden, wobei alle Zellen, die danach auf der Eingangs-VC empfangen werden, zur Ausgangs-VC innerhalb des ATM-Schalters weitergeleitet werden.

38. Verfahren nach Anspruch 37, **gekennzeichnet durch** den Schritt, die Eingangs- und die Ausgangs-VCs des ATM-Schalters kreuzweise unter Verwendung einer Ariel-Schnittstelle zwischen dem Schalter und dem CIN zu verbinden.

39. Verfahren nach Anspruch 38, **dadurch gekennzeichnet, dass** die kreuzweise verbundenen VCs die VCIs der Verbindungen des eingehenden und ausgehenden virtuellen Pfads, im Folgenden als VP abgekürzt, zwischen dem ATM-Schalter des CINs und seinen beiden benachbarten ATM-Schaltern sind, eine auf der Eingangsseite desselben und die andere auf der Ausgangsseite des ATM-Schalters des CIN.

40. Verfahren nach einem der Ansprüche 37 bis 39, **dadurch gekennzeichnet, dass** der CIN periodisch die kreuzweise verbundenen VCs überwacht, um irgendeinen VC zu trennen, von dem herausgefunden wird, dass er leer läuft.

41. Verfahren nach Anspruch 40, **dadurch gekennzeichnet, dass** eine Ariel-Schnittstelle zwischen dem CIN und seinem ATM-Schalter verwendet wird, um periodisch die kreuzweise verbundenen VCs zu überwachen.

42. Verfahren nach Anspruch 40 oder Anspruch 41, **gekennzeichnet, durch** die Schritte:
- im Falle, dass eine Eingangs-VC als inaktiv herausgefunden wird, wird die entsprechende Ausgangs-VC von der Kennzeichnungstabelle des CINs entfernt;
- die Ausgangs-VC wird in die Kennzeichnungstabelle als eine freie VC zurückgelegt; und
- die Eingangs-VC wird kreuzweise zurück zum CIN über eine VP-Verbindung auf der CIN/ATM-Schalterschnittstelle verbunden.

43. Verfahren nach einem der Ansprüche 36 bis 42, **dadurch gekennzeichnet, dass** jede Eintragung in der Kennzeichnungstabelle eines CINs enthält:
- eine Liste aller zusammengeführten Eingangs-VCs;
- die Ausgangs-VC zu einem Bestimmungsteilnetz, welche Ausgangs-VC durch den CIN während des Zusammenführens neuer Eingangs-VCs benutzt wird und eingerichtet wird, wenn eine neue Eintragung in die Kennzeichnungstabelle geschaffen wird;
- die Bestimmungsteilnetzadresse; und
- VC-Zeitgeber, einen für jede Eingangs-VC.

44. Verfahren nach Anspruch 43, **dadurch gekennzeichnet, dass** das Zusammenführen einer neuen Eingangs-VC mit der Ausgangs-VC die Schritte einschließt:
- jede CIN hört die VPCs ab, die zu ihm eingerichtet sind, wobei ein IP-Paket, die auf einer VCI einer der VPCs empfangen wird, durch den CIN abgerufen wird;
- den TTL zu vermindern und die Prüfungssumme des IP-Paketkopfes zu berechnen;
- die Kennzeichnungstabelle des CINs zu Rate zu ziehen, um zu bestimmen, ob bereits eine Ausgangs-VC zum Bestimmungsteilnetz existiert, zu dem das abgerufene IP-Paket gesendet werden soll;
- wenn eine existierende Ausgangs-VC identifiziert wird, sendet der CIN das IP-Paket auf der VC zum Bestimmungsteilnetz, wobei der CIN die Eingangs-VC mit der Ausgangs-VC zum Teilnetz zusammenführt; und
- im Falle, dass die Eingangs-VC nicht in der Liste der Eingangs-VCs in der Kennzeichnungstabelle des CINs eingeschlossen ist, wird sie durch den CIN zur Tabelle hinzugefügt.

45. Verfahren nach Anspruch 44, **gekennzeichnet durch** die Schritte:
- eine IP-Weiterleitungstabelle des CIN in dem Falle zur Rate zu ziehen, dass eine existierende Ausgangs-VC nicht identifiziert wird, um den nächsten Sprung auf dem Pfad zum Bestimmungsteilnetz zu finden;
- eine freie VCI von der VPC zum nächsten Sprung zu finden;
- eine Kennzeichnungstabelle des CIN zu schaffen, wobei eine Eintragung enthält:
- die Bestimmungsteilnetzadresse;
- die Eingangs-VC, erste in der VCI-Liste;
- die Ausgangs-VC, die freie VCI, die von der VPC zum nächsten Sprung ausgewählt ist;
- das IP-Paket über Ausgangs-VC zu senden; und
- die Eingangs-VC mit den Ausgangs-VCs unter Verwendung der CIN/ATM-Schalterschnittstelle zusammenzuführen und einen Zeitgeber für die Eingangs-VC zu starten, wobei alle Zellen, die danach mit der Eingang-VC empfangen werden, zur Ausgangs-VC innerhalb des ATM-Schalters weitergeleitet werden.

46. Verfahren nach einem der Ansprüche 37 bis 45, **dadurch gekennzeichnet, dass** der CIN periodisch die kreuzweise verbundenen/zusammengeführten VCs unter Verwendung der CIN/ATM-Schalterschnittstelle überwacht, um irgendeine VC zu trennen, die als leer laufend gefunden wird.

47. Verfahren nach Anspruch 45, **gekennzeichnet durch** die Schritte:
- im Falle, dass eine Eingangs-VC als inaktiv herausgefunden wird, wird die entsprechende Ausgangs-VC von der Kennzeichnungstabelle des CINs entfernt;
- die Eingangs-VC wird kreuzweise zurück zum CIN über eine VP-Verbindung auf der CIN/ATM Schalterschnittstelle zurückverbunden; und
- wenn die VC-Liste leer wird, wird die Ausgangs-VC als eine freie VC zurückgeführt, und die Eintragung für das Teilnetz wird von der Kennzeichnungstabelle des CINs entfernt.

48. Verfahren nach einem der Ansprüche 36 bis 47, **dadurch gekennzeichnet, dass** im Falle der Umleitung eines IP-Paketes die betroffenen Teilnetzadressen in der Kennzeichnungstabelle des CINs neuen VCs beruhend auf neuen Leitwegen für das Paket zugeordnet werden und die alten VCs als freie VCs zurückgebracht werden, nachdem sie Zeitablauf erlitten haben.

49. Verfahren nach einem der Ansprüche 27 bis 48, **dadurch gekennzeichnet, dass** Dienstqualität-Unterstützung geschaffen wird, indem CBR-VPCs parallel zu UBR-VPCs eingerichtet werden; dass jeder AIN Dienstklassen zu Datenflüssen zuordnet werden und eine Anzeige der Datenrate gegeben wird, die jedem Fluss zugeordnet ist, unter Verwendung des Diensttypfeldes im IP-Paketkopf, und dadurch, dass ein CIN bei Empfang des IP-Pakets auf einer CBR-VC:
- zuerst eine freie Ausgangs-CBR-VC zu dem Bestimmungteilnetz findet;
- die erforderliche Datenrate beruhend auf dem Wert des Diensttyps zuordnet;
- das IP-Paket auf der freien Ausgangs-CBR-VC sendet; und
- schließlich die Eingangs- und Ausgangs-VCs bei dem ATM-Schalter des CINs kreuzweise verbindet.

50. IP/ATM-Netz das ein ATM Übertragungssystem nach einem der Ansprüche 1 bis 26 einschließt, oder dazu ausgebildet ist, ein Verfahren nach einem der Ansprüche 27 bis 49 zu verwenden.

## Revendications

1. Système de transmission ATM destiné à transmettre des données IP, lequel système de transmission ATM comprend un réseau d'infrastructure de commutateurs ATM et est adapté pour traiter des communications inter-sous-réseau, **caractérisé en ce que** ledit réseau d'infrastructure comprend des noeuds IP/ATM d'accès, dont l'abréviation est ci-après AINs, et des noeuds IP/ATM de noyau, dont l'abréviation est ci-après CINs, pour traiter lesdites communications inter-sous-réseau, **en ce que** chaque AIN est attaché à un commutateur ATM du réseau d'infrastructure par l'intermédiaire d'une interface utilisateur-réseau ATM, dont l'abréviation est ci-après UNI, et est adapté pour réaliser une classification et un marquage de flux de données IP pour faciliter le mappage de flux de données IP sur des circuits virtuels ATM, dont l'abréviation est ci-après VCs, et pour communiquer avec des hôtes et routeurs IP/ATM, **en ce que** chaque CIN est attaché à un commutateur ATM du réseau d'infrastructure par l'intermédiaire d'une UNI ATM et est adapté pour réaliser un routage et un marquage, **en ce que** lesdits AINs et CINs sont interconnectés par l'intermédiaire de connexions de voies virtuelles, dont l'abréviation est ci-après VCPs, est **en ce que** des VCPs permanentes sont établies entre des CINs adjacents.

2. Système de transmission ATM selon la revendication 1, **caractérisé en ce que** lesdits AINs sont adaptés pour communiquer avec des hôtes non ATM.

3. Système de transmission ATM selon la revendication 2, **caractérisé en ce que** lesdits AINs sont adaptés pour communiquer avec des hôtes non ATM utilisant Ethernet.

4. Système de transmission ATM selon une quelconque revendication précédente, **caractérisé en ce que** lesdites communications inter-sous-réseau sont effectuées bond par bond, et **en ce que** ledit système de transmission ATM est adapté pour mapper chaque flux de données IP dans un circuit virtuel ATM pour chaque bond, entre noeuds, sur la voie de communication vers un sous-ensemble de destination.

5. Système de transmission ATM selon la revendication 4, **caractérisé en ce que** le VC ATM pour chaque bond entre noeuds est un VCI sélectionné à partir d'un VPC connectant les deux noeuds.

6. Système de transmission ATM selon une quelconque revendication précédente, **caractérisé en ce que** chaque AIN est adapté, lors de la réception d'un paquet de données IP à partir d'un hôte IP/ATM pour la transmission à un sous-réseau de destination, pour réassembler le paquet de données IP, décrémenter une horloge TTL (durée de vie), éliminant le paquet de données IP si l'horloge atteint zéro, calculer la somme de contrôle d'en-tête de paquet de données IP, et contrôler si le sous-ensemble de destination est supporté par le AIN et, dans l'affirmative, envoyer le paquet de données IP sur ce sous-ensemble.

7. Système de transmission ATM, selon la revendication 6, **caractérisé en ce que** chaque AIN comprend, et est adapté pour maintenir, une table de marquage et une table de renvoi IP standard, dont les entrées sont complétées par un protocole de routage IP.

8. Système de transmission ATM selon la revendication 7, **caractérisé en ce que** chaque entrée dans ladite table de marquage comprend une adresse de sous-réseau, le VC sortant pour atteindre le sous-réseau, et une horloge pour le VC, et **en ce que** l'horloge est adaptée pour être démarrée à chaque fois que des paquets IP sont envoyés sur le VC.

9. Système de transmission ATM selon l'une quelconque des revendications 6 à 8, **caractérisé en ce que**, au cas où le sous-ensemble de destination n'est pas supporté par le AIN, ledit AIN est adapté pour identifier un VC ATM existant vers ledit sous-ensemble de destination et pour envoyer le paquet de données IP sur un VC ATM existant identifié.

10. Système de transmission ATM selon la revendication 9, **caractérisé en ce que**, au cas où un VC ATM existant n'est pas identifié, ledit AIN est adapté pour identifier le bond suivant sur la voie jusqu'au sous-ensemble de destination, en consultant sa table de renvoi, et pour choisir, et envoyer le paquet IP sur, un VCI libre de la VPC au bond suivant, et **en ce que** ledit AIN est adapté pour mettre à jour sa table de marquage en réalisant une entrée contenant l'adresse de sous-ensemble de destination et le VC choisi, et pour redémarrer l'horloge de l'entrée, ladite horloge possédant une valeur de durée de vie pour le VC.

11. Système de transmission ATM, selon la revendication 10, **caractérisé en ce que** ledit bond suivant sur la voie jusqu'au sous-ensemble de destination est un CIN.

12. Système de transmission ATM selon l'une quelconque des revendications précédentes, **caractérisé en ce que** chaque AIN est adapté pour écouter les VPCs sur lesquelles il est établi, pour réassembler les cellules provenant du réseau d'infrastructure en paquets IP, pour réaliser des calculs sur la TTL et la somme de contrôle d'en-tête, et pour router des paquets valides vers des hôtes/routeurs ATM attachés à un réseau d'accès.

13. Système de transmission ATM selon l'une quelconque des revendications précédentes, **caractérisé en ce que** chaque CIN est adapté pour :
- écouter les VPCs sur lesquelles il est établi ;
- récupérer un paquet IP à partir d'une cellule reçue sur un VCI d'une desdites VPCs ;
- décrémenter une TTL et calculer la somme de contrôle d'en-tête de paquet IP ;
- consulter sa table de marquage pour déterminer s'il y a un VC sortant déjà en existence sur un sous-réseau de destination auquel le paquet IP doit être envoyés ; et
- si un VC sortant existant est identifié, envoyer le paquet IP sur ce VC et redémarrer l'horloge du VC.

14. Système de transmission ATM selon la revendication 13, **caractérisé en ce que**, au cas où un VC sortant existant n'est pas identifié, ledit CIN est adapté pour identifier le bond suivant sur la voie vers le sous-ensemble de destination en consultant sa table de renvoi IP, et pour choisir un VCI libre de la VPC au bond suivant, **en ce que** ledit CIN est adapté pour mettre à jour sa table de marquage en réalisant une entrée contenant l'adresse de sous-ensemble de destination, le VC entrant, le VC sortant et le VCI libre choisi de la VPC au bond suivant, et **en ce que** ledit CIN est adapté pour régler l'horloge VC pour l'entrée nouvellement créée dans ladite table de marquage, envoyer le paquet IP sur le VC sortant et interconnecter le VC entrant dans, et lie VC sortant de, son commutateur ATM, toutes les cellules après cela reçues sur ledit VC entrant étant renvoyées audit VC sortant à l'intérieur dudit commutateur ATM.

15. Système de transmission ATM selon la revendication 14, **caractérisé en ce que** ledit CIN est adapté pour contrôler ladite interconnexion en utilisant des switchlets, une interface Ariel étant prévue entre ledit commutateur ATM et ledit CIN pour interconnecter lesdits VCs entrants et sortants dudit commutateur ATM.

16. Système de transmission ATM selon la revendication 15, **caractérisé en ce que** lesdits VCs interconnectés sont les VCIs des liaisons de voies virtuelles (VP) entrantes et sortantes entre ledit commutateur ATM dudit CIN et ses deux commutateurs ATM voisins, un sur un côté d'entrée dudit, et l'autre sur un côté de sortie dudit, commutateur ATM dudit CIN.

17. Système de transmission ATM selon l'une quelconque des revendications 14 à 16, **caractérisé en ce que** ledit CIN est adapté pour surveiller périodiquement les VCs interconnectés afin de déconnecter tout VC déterminé comme étant au repos.

18. Système de transmission ATM, selon la revendication 17, **caractérisé en ce qu'**une interface Ariel est prévue entre ledit CIN et son commutateur ATM, et **en ce que** ledit CIN est adapté pour utiliser ladite interface Ariel pour surveiller périodiquement les VCs interconnectés.

19. Système de transmission ATM selon la revendication 17 ou à revendication 18, **caractérisé en ce que**, au cas ou en VC entrant est déterminé comme étant inactif, ledit CIN est adapté pour purger le VC sortant correspondant de sa table de marquage, le VC entrant correspondant étant interconnecté de nouveau au CIN par l'intermédiaire d'une liaison de VP sur l'interface CIN/commutateur ATM, et **en ce que** ledit CIN est adapté pour ré-entrer le VC sortant purgé dans sa table de marquage en tant que VC libre.

20. Système de transmission ATM selon l'une quelconque des revendications 13 à 19, **caractérisé en ce que** chaque entrée dans une table de marquage des CINs contient :
- une liste de tous les VCs entrants fusionnés ;
- le VC sortant vers un sous-réseau de destination, ledit VC sortant étant utilisé par le CIN au cours de la fusion de nouveaux VCs entrants est est établi lorsqu'une nouvelle entrée est créée dans la table de marquage ;
- l'adresse de sous-ensemble de destination ; et
- des horloges de VC, une pour chaque VC entrant.

21. Système de transmission ATM selon la revendication 20, **caractérisé en ce que** chaque CIN est adapté pour fusionner un nouveau VC entrant avec un VC sortant, chaque CIN étant adapté pour écouter les VPCs sur lesquelles il est établi et pour :
- récupérer un paquet IP reçu sur un VCI d'une desdites VPCs
- décrémenter la TTL et calculer la somme de contrôle d'en-tête de paquet IP ;
- consulter sa table de marquage pour déterminer s'il y a un VC sortant déjà en existence sur le sous-ensemble de destination auquel le paquet IP récupéré doit être envoyé;
- si un VC sortant existant est identifié, envoyer le paquet IP sur ce VC au sous-ensemble de destination, le CIN fusionnant le VC entrant sur le VC sortant sur le sous-réseau ; et
- au cas où le VC entrant n'est pas inclus dans la liste de VCs entrants dans sa table de marquage, l'ajouter à ladite table de marquage.

22. Système de transmission ATM selon la revendication 21, **caractérisé en ce que**, au cas où un VC sortant existant n'est pas identifié, chaque CIN est adapté pour trouver le bond suivant sur à voie vers le sous-ensemble de destination en consultant sa IP table de renvoi et pour choisir un VCI libre de la VPC au bond suivant, **en ce que** ledit CIN est adapté pour mettre à jour sa table de marquage en réalisant une entrée contenant l'adresse de sous-ensemble de destination, le VC entrant, premier dans la liste de VC, le VC sortant et le VCI libre choisi de la VPC au bond suivant, et **en ce que** ledit CIN est adapté pour envoyer le paquet IP sur le VC sortant, pour fusionner le VC entrant sur les VCs sortants en utilisant une interface CIN/commutateur ATM et pour démarrer une horloge pour le VC entrant, toutes les cellules après cela reçues sur ledit VC entrant étant renvoyées au VC sortant à l'intérieur dudit commutateur ATM,

23. Système de transmission ATM, selon l'une quelconque des revendications 14 à 16, **caractérisé en ce que** chaque CIN est adapté pour surveiller périodiquement les VCs interconnectés/fusionnés afin de déconnecter tout VC déterminé comme étant au repos.

24. Système de transmission ATM, selon la revendication 23, **caractérisé en ce que**, au cas où un VC entrant est déterminé comme étant inactif, ledit CIN est adapté pour purger le VC sortant correspondant de sa table de marquage, le VC entrant étant interconnecté de nouveau au CIN par l'intermédiaire d'une liaison de VP sur l'interface CIN/commutateur ATM, et **en ce que**, au cas où à liste de VC devient vide, ledit CIN est adapté pour renvoyer le VC sortant purgé à sa table de marquage, et pour effacer l'entrée pour le sous-réseau à partir de la table de marquage.

25. Système de transmission ATM. selon l'une quelconque des revendications 13 à 24, **caractérisé en ce que**, en cas de re-routage d'un paquet IP, le CIN est adapté pour attribuer de nouveaux VCs aux adresses affectées de sous-réseau dans sa table de marquage, sur la base de nouvelles routes pour le paquet IP, les anciens VCs, après être arrives à bout de leur délai, étant ré-entrès dans à table de marquage en tant que VCs libres.

26. Système de transmission ATM selon une quelconque revendication précédente, **caractérisé en ce que** ledit système est adapté pour fournir un support de qualité de service (QoS) en rétablissant des VPCs de CBR (débit binaire constant) en parallèle à des VPCs de UBR (débit binaire non spécifié) ; **en ce que** chaque AIN est adapté pour attribuer des classes de service à des flux de données et fournit une indication du débit de données attribué à chaque flux en utilisant le type de champ de service dans l'en-tête de paquet IP ; et **en ce que** chaque CIN est adapté, lors de la réception d'un paquet IP sur un VC de CBR, pour trouver en premier un VC de CBR sortant libre vers le sous-ensemble de destination, attribuer un débit de données nécessaire sur la base du type de valeur de service, envoyer le paquet IP sur le VC de CBR sortant libre, et pour finir, interconnected les VCs entrants et sortants au niveau de son commutateur ATM.

27. Procédé de transmission de données IP sur un système de transmission ATM possédant un réseau d'infrastructure comprenant un nombre de commutateurs ATM, ledit procédé traitant des communications inter-sous-réseau, bond par bond, **caractérisé par** les étapes suivantes consistant à :
- effectuer lesdites communications inter-sous-réseau au moyen de noeuds IP/ATM d'accès, dont l'abréviation est ci-après AINs, et de noeuds IP/ATM de noyau, dont l'abréviation est ci-après CINs, dudit réseau d'infrastructure;
- attacher chaque AIN à un commutateur ATM du réseau d'infrastructure par l'intermédiaire d'une interface utilisateur-réseau ATM, dont l'abréviation est ci-après UNI ;
- attacher chaque CIN à un commutateur ATM du réseau d'infrastructure par l'intermédiaire d'une UNI ATM ;
- interconnecter lesdits AINs et CINs par l'intermédiaire de connexions de voies virtuelles, dont l'abréviation est ci-après VCPs ;
- établir des VCPs permanentes entre des CINs adjacents ;
- chaque AIN communiquant avec un hôte IP/ATM et exécutant une classification et un marquage de flux de données IP ;
- chaque CIN exécutant un routage et un marquage ;
- un AIN reçoit un paquet de données IP à partir d'un hôte IP/ATM, réassemble le paquet de données IP, et transmet le paquet de données IP à un sous-réseau de destination ;
- décrémenter une horloge de durée de vie, dont l'abréviation est ci-après horloge TTL, selon la valeur 1 et jeter le paquet de données IP si l'horloge TTL atteint zéro ;
- calculer la somme de contrôle d'en-tête de paquet de données IP ; et
- contrôler si le sous-ensemble de destination est supporté par le AIN et, dans l'affirmative, envoyer le paquet de données IP sur ce sous-ensemble.

28. Procédé selon la revendication 27, **caractérisé en ce que** ledit AIN maintient une table de marquage et une table de renvoi IP standard remplies par un protocole de routage IP.

29. Procédé selon la revendication 28, **caractérisé en ce que** chaque entrée dans ladite table de marquage comprend :
- une adresse de sous-réseau ;
- le VC sortant pour atteindre le sous-réseau ; et
- une horloge pour le VC, l'horloge étant démarrée à chaque fois que des paquets IP sont envoyés sur le VC.

30. Procédé selon la revendication 29, **caractérisé par** les étapes consistant à :
- au cas où le sous-ensemble de destination n'est pas supporté par le AIN, consulter la table de marquage dudit AIN pour déterminer s'il y a un VC ATM déjà en existence vers le sous-ensemble de destination auquel le paquet doit être envoyé ; et
- si un VC ATM, existant est identifie, ledit AIN :
- hache sur l'adresse de sous-réseau ;
- envoie le paquet sur le VC identifié ; et
- redémarre l'horloge.

31. Procédé selon à revendication 30, **caractérisé par** les étapes consistant à :
- consulter la table de renvoi dudit AIN, au cas où un VC ATM existant n'est pas identifié, pour trouver le bond suivant sur la voie jusqu'au sous-ensemble de destination ;
- trouver un VCI libre de la VPC au bond suivant ;
- envoyer le paquet IP sur un CI choisi ;
- créer, dans à table de marquage dudit AIN, une entrée contenant l'adresse de sous-ensemble de destination et le VC ; et
- redémarrer l'horloge de l'entrée, ladite horloge possédant une valeur de durée de vie pour le VC.

32. Procédé selon la revendication 31, **caractérisé en ce que** ledit bond suivant sur la voie jusqu'au sous-ensemble de destination est un CIN.

33. Procédé selon l'une quelconque des revendications 30 à 32, **caractérisé par** l'étape consistant à utiliser un multiplexage de VC de IETF RFC 1483 pour encapsuler des paquets IP envoyés sur lesdits VCs ATM.

34. Procédé selon l'une quelconque des revendications 29 à 33, **caractérisé par** les étapes consistant à :
- purger une entrée VC de la table de marquage d'un AIN, au cas où une horloge VC correspondante arrive au bout de son délai, le VC purgé étant mis en antémémoire pendant une période avant de devenir disponible pour l'utilisation ;
- forcer tous les VCs aval, dans la voie jusqu'au sous-ensemble de destination, à arriver à bout de leur délai ; et
- si le re-routage se produit sur de nouvelles routes, de nouveaux VCs sont attribués aux adresses de sous-réseau affectées trouvées dans la table de marquage, sur à base des nouvelles routes, les anciens VCs devenant libres après être arrivés à bout de leur déliai.

35. Procédé selon l'une quelconque des revendications 27 à 34, **caractérisé par** les étapes consistant à :
- écouter les VPCs établies sur un AIN ;
- réassembler les cellules provenant du réseau d'infrastructure en paquets IP ;
- exécuter des calculs sur la TTL et la somme de contrôle d'en-tête ; et
- router des paquets valides vers des hôtes/routeurs ATM attachés à un réseau d'accès.

36. Procédé selon l'une quelconque des revendications 27 à 35, **caractérisé par** les étapes consistant à :
- écouter les VPCs établies sur un CIN ;
- réassembler une cellule, reçue par le CIN sur un VCI d'une desdites VPCs, pour récupérer un paquet IP ;
- décrémenter la TTL et calculer la somme de contrôle d'en-tête de paquet IP ;
- consulter une table de marquage du CIN pour déterminer s'il y a un VC sortant déjà en existence sur un sous-réseau de destination auquel le paquet IP doit être envoyé ; et
- si un VC sortant existant est identifié, le CIN envoie le paquet IP sur ce VC et redémarre son horloge.

37. Procédé selon la revendication 36, **caractérisé par** les étapes consistant à :
- consulter une table de renvoi IP du CIN, au cas où un VC sortant existant n'est pas identifié, pour trouver le bond suivant sur la voie vers le sous-ensemble de destination ;
- trouver un VCI libre de la VPC au bond suivant ;
- créer, dans la table de marquage dudit CIN, une entrée contentant :
- l'adresse de sous-ensemble de destination ;
- le VC entrant ;
- le VC sortant, le VCI libre choisi de la VPC au bond suivant ;
- régler l'horloge VC pour l'entrée nouvellement créée dans la table de marquage du CIN ;
- envoyer le paquet IP sur le VC sortants ; et
- interconnected les VCs entrants et sortants du commutateur ATM du CIN, toutes les cellules après cela reçues sur ledit VC entrant étant renvoyées audit VC sortant à l'intérieur dudit commutateur ATM,

38. Procédé selon la revendication 37, **caractérisé par** l'étape consistant à interconnecter lesdits VCs entrants et sortants dudit commutateur ATM en utilisant une interface Ariel entre ledit commutateur est ledit CIN.

39. Procédé selon la revendication 38, **caractérisé en ce que** lesdits VCs interconnectés sont les VCIs des liaisons de voies virtuelles entrantes et sortantes, dont l'abréviation est ci-après VF, entre le commutateur ATM du CIN et ses deux commutateurs ATM voisins, un sur un côté d'entrée dudit, et l'autre sur un côté de sortie dudit, commutateur ATM dudit CIN.

40. Procédé selon l'une quelconque des revendications 37 à 39, **caractérisé en ce que** ledit CIN surveille périodiquement les VCs interconnectés afin de déconnecter tout VC déterminé comme étant au repos.

41. Procédé selon la revendication 40, **caractérisé par** l'étape consistant à utiliser une interface Ariel entre ledit CIN et son commutateur ATM pour surveiller périodiquement les VCs interconnectés.

42. Procédé selon la revendication 40, ou la revendication 41, **caractérisé par** les étapes consistant a :
- au cas où un VC entrant est déterminé comme étant inactif, le VC sortant correspondant est purgé à partir de la table de marquage des CINs ;
- le VC sortant est remis dans la table de marquage en tant que VC libre ; et
- le VC entrant est interconnecté de nouveau au CIN par l'intermédiaire d'une liaison de VP sur l'interface CIN/commutateur ATM.

43. Procédé selon l'une quelconque des revendications 36 à 42, **caractérise en ce que** chaque entrée dans une table de marquage des CINs contient :
- une liste de tous les VCs entrants fusionnés ;
- le VC sortant vers une sous-réseau de destination, ledit VC sortant étant utilisé par le CIN au cours de la fusion de nouveaux VCs entrants est est établi lorsqu'une nouvelle entrée est; créée dans la table de marquage ;
- l'adresse de sous-ensemble de destination ; et
- des horloges de VC, une pour chaque VC entrant.

44. Procédé selon la revendication 43, **caractérisé en ce que** ladite fusion d'un nouveau VC entrant avec le VC sortant comprend les étapes consistant, à :
- chaque CIN écoutant les VPCs établies sur lui, un paquet IP reçu sur un VCI d'une des VPCs étant récupéré par le CIN ;
- décrémenter la TTL et calculer la somme de contrôle d'en-tête de paquet IP;
- consulter la table de marquage du CIN pour déterminer s'il y a un VC sortant déjà en existence sur le sous-ensemble de destination auquel le paquet IP récupéré doit être envoyé ; si un VC sortant existant est identifié, le CIN envoie le paquet IP sur ce VC au sous-ensemble de destination, le CIN fusionnant le VC entrant sur le VC sortant sur le sous-réseau ; et
- au cas où le VC entrant n'est pas inclus dans la liste de VCs entrants dans la table de marquage du CIN, il est ajouté à la table par le CIN.

45. Procédé selon la revendication 44, **caractérisé par** les étapes consistant à :
- consulter une table de renvoi IP du CIN, au cas où un VC sortant existant n'est pas identifié, pour trouver le bond suivant sur la voie vers le sous-ensemble de destination;
- trouver un VCI libre de la VPC au bond suivant ;
- créer, dans à table de marquage dudit CIN, une entrée contenant :
- l'adresse de sous-ensemble de destination ;
- le VC entrant, premier dans la liste de VC ;
- le VC sortant, le VCI libre choisi de la VPC au bond suivant ;
- envoyer le paquet IP sur le VC sortant ; et
- fusionner le VC entrant sur les VCs sortants en utilisant l'interface CIN/commutateur ATM et démarrer une horloge pour le VC entrant, toutes les cellules après cela reçues sur ledit VC entrant étant renvoyées au VC sortant à l'intérieur dudit commutateur ATM.

46. Procédé selon l'une quelconque des revendications 37 à 45, **caractérisé en ce que** ledit CIN surveille périodiquement les VCs interconnectés/fusionnés en utilisant l'interface CIN/commutateur ATM afin de déconnecter tout VC déterminé comme étant au repos.

47. Procédé selon la revendication 45, **caractérisé par** les étapes consistant à :
- au cas où un VC entrant est déterminé comme étant inactif, le VC sortant correspondant est purgé à partir de la table de marquage des CINs ;
- le VC entrant est interconnecté de nouveau au CIN par l'intermédiaire d'une liaison de VP sur l'interface CIN/commutateur ATM ; et
- si la liste de VC devient vide, le VC sortant est renvoyé en tant que VC libre et l'entrée pour le sous-réseau est effacée à partir de la table de marquage du CIN.

48. Procédé selon l'une quelconque des revendications 36 à 47, **caractérisé en ce que**, en cas de re-routage d'un paquet IP, de nouveaux VCS sont attribués aux adresses de sous-réseau affectées dans la table de marquage du CIN sur la base de nouvelles routes pour le paquet, et les anciens VCs sont remis en tant que VCs libres, après être arrivés à bout de leur délai.

49. Procédé selon l'une quelconque des revendications 27 à 48, **caractérisé par** l'étape consistant à fournir un support de qualité de service (QoS) en établissant des VPCs de CBR (débit binaire constant) en parallèle à des VPCs de USER (débit binaire non spécifié) ; en ce que chaque AIN attribue des classes de service à des flux de données et fournit une indication du débit de données attribué a chaque flux en utilisant le type de champ de service dans l'en-tête de paquet IP ; et en ce qu'un CIN, lors de la réception d'un paquet IP sur un VC de CBR :
- premièrement trouve un VC de CBR sortant libre vers le sous-ensemble de destination ;
- attribue le débit de données nécessaire sur la base du type de valeur de service ;
- envoie le paquet IP sur le VC de CBR sortant libre ; et
- pour finir, interconnecte les VCs entrants et sortants au niveau du commutateur ATM du CIN.

50. Réseau IP/ATM comprenant un système de transmission ATM selon l'une quelconque des revendications 1 à 26, ou adapté pour utiliser un procédé selon l'une quelconque des revendications 27 à 49.
